# EUROPÄISCHE PATENTSCHRIFT

(11) **EP 3 585 833 B1**
(45) Veröffentlichungstag und Bekanntmachung des Hinweises auf die Patenterteilung: **01.04.2026**
(21) Anmeldenummer: 18705885.4
(22) Anmeldetag: 14.02.2018
(51) Int. Cl.: C08K 5/5399, C07F 9/24, C07F 9/36, C07F 9/44

(54) **EFFIZIENTE PHOSPHORHALTIGE STABILISATOREN AUF BASIS VON DIPHENYLAMIN UND HETEROCYCLISCHER DIPHENYLAMIN-DERIVATE**
EFFICIENT PHOSPHOROUS STABILISERS BASED ON DIPHENYLAMINE AND HETEROCYCLIC DIPHENYLAMINE DERIVATIVES
STABILISATEURS EFFICACES CONTENANT DU PHOSPHORE, À BASE DE DIPHÉNYLAMINE ET DE DÉRIVÉS DE DIPHÉNYLAMINE HÉTÉROCYCLIQUES

(30) Priorität: 27.02.2017 DE 102017203164
(43) Veröffentlichungstag der Anmeldung: 01.01.2020
(73) Patentinhaber: Fraunhofer-Gesellschaft zur Förderung der angewandten Forschung e.V., 80686 München (DE)
(72) Erfinder: CIESIELSKI, Michael, 06217 Merseburg (DE); BRIESENICK, Max, 64404 Bickenbach (DE); PFAENDNER, Rudolf, 64668 Rimbach (DE)
(74) Vertreter: Pfenning, Meinig & Partner mbB
(86) Internationale Anmeldenummer: PCT/EP2018/053670
(87) Internationale Veröffentlichungsnummer: WO 2018/153747

(56) Entgegenhaltungen:
- CN-A- 102 237 551
- CN-A- 104 212 439
- CN-A- 105 859 778
- DD-A1- 146 464
- DE-A1- 2 417 991
- US-A- 4 661 594
- US-A- 5 230 816
- M. M. COLE G. S. BURDEN: "Phosphorus Compounds as Ovicides and Adulticides against Body Lice", JOURNAL OF ECONOMIC ENTOMOLOGY, vol. 49, no. 6, 1 December 1956 (1956-12-01), pages 747 - 750, XP009504907, ISSN: 0022-0493, DOI: 10.1093/jee/49.6.747
- DATABASE CA [online] CHEMICAL ABSTRACTS SERVICE, COLUMBUS, OHIO, US; 22 April 2001 (2001-04-22), COLE, M. M. ET AL: "Phosphorus compounds as ovicides and adulticides against body lice", XP002780232, retrieved from STN Database accession no. 1957:31513
- A. A. YEHIA ET AL: "Evaluation of amino-phosphine compounds as antioxidants and antifatigue agents in NR and SBR vulcanizates", POLYMER-PLASTICS TECHNOLOGY AND ENGINEERING, vol. 41, no. 2, 26 April 2002 (2002-04-26), US, pages 199 - 213, XP055468118, ISSN: 0360-2559, DOI: 10.1081/PPT-120002563

## Beschreibung

Die vorliegende Erfindung betrifft die Verwendung effizienter phosphorhaltiger Substanzen insbesondere auf Basis von Diphenylamin und heterocyclischer Diphenylamin-Derivaten als Stabilisatoren für organische Materialen, insbesondere für Kunststoffmaterialen gegen oxidativen, thermischen und/oder actinischen Abbau. Zudem betrifft die vorliegende Erfindung ein organisches Material, das wie voranstehend entsprechend stabilisiert ist. Die Erfindung betrifft weiterhin ein Verfahren zur Stabilisierung von organischen Materialien, sowie spezifische Stabilisatoren.

Kunststoffe und kunststoffbasierende Zusammensetzungen wie z.B. Beschichtungen unterliegen bei der Verarbeitung und beim Einsatz der Autoxidation.

Diese führt ausgehend von radikalischen Kettenspaltungen durch mechanochemische Prozesse oder durch UV-Strahlung in Gegenwart von Sauerstoff zu Veränderungen der Polymerkette, wie z.B. im Molekulargewicht oder der Bildung neuer chemischer Gruppen.

Die Aufspaltung bzw. chemische Veränderung von Polymermolekülen verschlechtern die mechanischen Parameter der Kunststoffe und führen zu Farbveränderungen (Vergilbung) bzw. zu anderen unerwünschten Effekten. Der thermische Abbau limitiert die maximale Einsatztemperatur von Kunststoffen, und Alterungsprozesse beschränken die mögliche Einsatzdauer von Kunststoffgegenständen, welche mit zunehmender Temperatur verkürzt wird.

Deshalb ist die Zugabe spezieller Stabilisatoren wie z.B. Antioxidantien und Lichtschutzmittel erforderlich, welche die Abbauvorgänge verzögern und somit einen erheblichen Einfluss auf die Verarbeitbarkeit und den Verwendungsbereich von Kunststoffen haben.

Derzeit besteht ein großes Interesse an leistungsfähigeren Stabilisatoren bzw. Stabilisator-Systemen, u. a. weil Kunststoffe zunehmend in Anwendungsbereichen eingesetzt werden, in denen sie erhöhten thermischen bzw. mechanischen Beanspruchungen ausgesetzt sind (Elektromobilität, Leichtbaukonstruktionen, Hochleistungsbatterien usw.). Ein weiterer Grund um nach neuen Stabilisatoren zu suchen besteht darin, dass viele derzeit eingesetzte Substanzen nicht alle Anforderungen z.B. hinsichtlich ihrer Kompatibilität mit den zu schützenden Polymeren, einer geringen Migration oder der Bildung von unerwünschten Abbauprodukten erfüllen.

Es gibt verschiedene Stabilisator-Arten, von denen u. a. die folgenden bedeutungsvoll sind:
- Verarbeitungsstabilisatoren verlangsamen die bei hohen Verarbeitungstemperaturen ablaufenden Abbauvorgänge.
- Langzeit-Thermostabilisatoren werden eingesetzt um die Alterung zu verzögern, insbesondere bei erhöhten Temperaturen.
- Hochtemperaturstabilisatoren wirken dem Abbau entgegen, wenn Kunststoffe hohen Temperaturen ausgesetzt werden (180°C und darüber).
- UV-Stabilisatoren verzögern bzw. verhindern die durch UV-Licht initiierten Abbauvorgänge.

Die unterschiedlichen Stabilisatoren werden in vielen Fällen als (synergistische) Kombinationen eingesetzt. Die Aufgabe von Stabilisatoren besteht u. a. darin entstandene freie Radikale abzufangen sowie die bei Sauerstoffeinwirkung entstehenden Peroxide und Hydroperoxide zu deaktivieren, da diese eine Schädigung der Polymerkette verursachen. Die Wirksamkeit der Stabilisatoren bzw. Antioxidanten ist von wesentlicher Bedeutung sowohl für die Verarbeitbarkeit der Kunststoffe wie auch für die Lebensdauer der Gegenstände, die aus ihnen gefertigt werden. Sie beeinflussen auch die maximale Einsatztemperatur der Kunststoffe bzw. deren mögliche Einsatzdauer bei erhöhten Temperaturen.

Es sind zahlreiche chemische Verbindungen als Stabilisatoren / Antioxidantien am Markt verfügbar. Die wichtigsten Klassen der Antioxidantien sind sterisch gehinderte Phenole, Phosphite oder Phosphonite, Amine, Thioverbindungen, Hydroxylamine und Lactone. Als Lichtstabilisatoren, die gleichzeitig als Langzeit-Wärmestabilisatoren eingesetzt werden, sind insbes. sterisch gehinderte Amine, sog. HALS-Verbindungen, zu nennen. Als UV-Absorber werden darüber hinaus häufig Benzotriazole, Benzophenone, Hydroxyphenyltriazine u.a. verwendet.

Die besondere Bedeutung der Phosphit-Stabilisatoren resultiert aus ihrer Fähigkeit Peroxide und Hydroperoxide zu deaktivieren. Die bislang verwendeten Substanzen haben jedoch Nachteile, u. a. hinsichtlich ihrer Thermostabilität, Langzeitwirksamkeit, Hydrolysebeständigkeit und Kompatibilität, so dass intensiv nach neuen, besseren Stabilisatoren gesucht wird, die u. a. folgende Vorteile haben sollen:
- Erhöhte Hydrolysebeständigkeit und verbesserte thermische Eigenschaften
- Einsetzbarkeit bei besonders hohen Temperaturen;
- besonders hohe und langanhaltende Effizienz;
- keine unerwünschten Begleiteffekte (Verfärbungen usw.).

Für Elastomere werden Derivate des Diphenylamins als umweltfreundliche, wenig toxische Stabilisatoren eingesetzt. Die strukturell ähnliche, heterocyclische Verbindung Phenothiazin besitzt ebenfalls eine große Fähigkeit Radikale zu deaktivieren und ist nur gering toxisch. Sie wird zur Lagerstabilisierung von Acrylaten, Methacrylaten und anderen Monomeren verwendet, wobei sie durch Abfangen von Radikalen deren spontane Polymerisation verhindert, also in ähnlicher Weise wie Kunststoffstabilisatoren wirkt. Des Weiteren ist Phenothiazin ein wirksames Antioxidans für Schmierstoffe. Ein Patent aus dem Jahr 1961 (GB 4331, "Phenothiazine stabilizers for polyethylene") beinhaltet die Verwendung von Phenothiazin als Stabilisator für Polyethylen. Phenothiazin hat jedoch trotz der nachgewiesenen stabilisierenden Wirkung von thermoplastischen Kunststoffen und Elastomeren den Nachteil einer hohen Flüchtigkeit unter den üblichen Verarbeitungsbedingungen und besitzt dadurch keine kommerzielle Bedeutung als Kunststoffstabilisator.

Bislang wurden nur sehr wenige phosphorhaltige Phenothiazin-Derivate beschrieben bzw. in Patenten aufgeführt. Phenothiazinderivate, die phosphorhaltige Substituenten am Stickstoffatom tragen, werden in den folgenden Patenten erwähnt: WO2015158692A1 (2016), WO2015158689A1 (2016), CN 101531578A (2009).

In dem Patent JP2006328100A (Songwon Industrial Co. LTD, 2006) wird folgende Verbindung als Flammschutzmittel für Kunststoffe erwähnt:

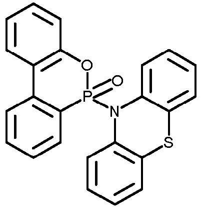

Bislang war jedoch hinsichtlich einer Wirkung dieser Verbindung und anderer phosphorhaltiger Derivate des Phenothiazins zur antioxidativen Stabilisierung nichts bekannt.

Vom strukturell verwandten Carbazol sind zahlreiche phosphorhaltige Derivate beschrieben worden, und in der Patentliteratur sind verschiedene Anwendungsmöglichkeiten derartiger Substanzen aufgeführt, jedoch nicht als Stabilisator für Kunststoffe.

Von phosphorhaltigen Diphenylamin-Derivaten, die mindestens ein Kohlenstoffatom am Phosphoratom tragen, ist über eine Verwendung bzw. Testung als Stabilisator für Kunststoffe nichts bekannt.

M. M. Cous et al. beschreiben in Journal of Economic Entomology, 1956, 49, 6, 747-750 die Verwendung verschiedener Phosphor enthaltenden Verbindungen als Ovizide.

A. A. Yehia et al. beschreiben in Polymer-Plastics Technology and Engeneering, 2002, 41, 2, 199-213 die Herstellung von Aminophosphinderivaten wie Tri(diphenylamino)phosphin und Tri(di-cymyl-di-phenylamino)phosphin. Diese Verbindungen wurden in Naturkautschuk (NR) und Styrol-Butadien-Kautschuk (SBR) Mischungen eingearbeitet. Die rheometrischen Eigenschaften der grünen Kautschukmischungen wurden mit dem Rheometer für oszillierende Scheiben bestimmt. Die hergestellten Verbindungen wurden als ermüdungshemmende und antioxidative Mittel in NR- und SBR-Vulkanisaten bewertet. Die Ergebnisse zeigten, dass die untersuchten Verbindungen gute Antioxidantien und Ermüdungsschutzmittel sind und ihre Wirksamkeit besser ist als die von Phenyl-β-naphthylamin, das in der Gummiindustrie weit verbreitet ist.

CN 102 237 551 A stellt einen nicht-wässrigen Elektrolyten, ein Herstellungsverfahren dafür und eine Batterie bereit, die den nicht-wässrigen Elektrolyten verwendet. Der Elektrolyt enthält ein Lithiumsalz, ein organisches Lösungsmittel und ein Additiv.

US 4,664,594 A beschreibt wirksame Verarbeitungsstabilisatoren für Polymere, in insbesondere für Polyolefine, die zusätzlich stabilisierend gegen Lichtschäden wirken.

US 5,230,816 A bezieht sich auf neue 3,9-Bis(dialkylamino-2,4,8,10-tetraoxa-3,9-diphosphaspiro[5.5]undecan-Verbindungen und stabilisierte Zusammensetzungen, die diese Verbindungen enthalten.

CN 104 212 439 A betrifft ein photoelektrisches Funktionsmaterial mit einer N-P=S-Resonanzstruktur, ein Herstellungsverfahren und eine Anwendung. Das photoelektrische Funktionsmaterial, das die N-P=S-Resonanzstruktur, dynamisch einstellbare elektrische Leistungen, ein hohes Triplett-Zustandsenergieniveau und bipolare Übertragungseigenschaft besitzt, hat die Vorteile billiger Rohmaterialien, eines einfachen und bequemen Syntheseverfahrens und einer guten Löslichkeit, Film- Formbarkeit und Stabilität. Durch Einführen der N-P=S-Resonanzstruktur wird das Material offensichtlich in der Trägerübertragungsfähigkeit verbessert und ist mit einer ausgezeichneten Hohlraumübertragung und Elektronenübertragungsfähigkeit ausgestattet. Aus dem Material hergestellte Elektrolumineszenzvorrichtungen haben einen hohen Wirkungsgrad, eine relativ niedrige Einschaltspannung und stabile Elektrolumineszenzleistungen. Das technische Schema hat eine wichtige Bedeutung für die Entwicklung effizienter stabiler organischer Leuchtdioden.

CN 105 859 778 A offenbart ein reines organisches phosphoreszierendes Material mit Nachleuchtleistung und einer ultralangen Lebensdauer, ein Verfahren zur Herstellung des reinen organischen phosphoreszierenden Materials und dessen Anwendung. Das reine organische phosphoreszierende Material umfasst Phenylphosphor- und Carbazolstrukturen und ist DNCzPS oder DNCzPSe. Das Verfahren umfasst die Durchführung einer Reaktion an Carbazol und Dichlorphenylphosphin bei niedrigen Temperaturen, um Dicarbazolylphenylphosphor zu erhalten, der ein Zwischenprodukt ist; Durchführen einer Vulkanisations- oder Selenylierungsreaktion an dem Zwischenprodukt, um die entsprechenden Produkte DNCzPS und DNCzPSe zu erhalten.

DE 24 17 991 A beschreibt Thiophosphorsäureamide, Verfahren zu deren Herstellung und deren Anwendung.

Aus der DD 146 646 ist ein Verfahren zur Stabilisierung organischer Polymerer durch Phosphorigsäureesteramide gegen thermooxidativen Abbau bekannt. Die erfindungsgemäBen sterisch gehinderten Phosphorigsäureesteramide weisen eine gute Farb- und Hydrolysestabilität auf und sind sowohl-bei niedrigeren (< 100 °C als auch bei höheren (> 150 °C) Temperaturen effektiv wirksam.

Aufgabe der vorliegenden Erfindung war es neue wirksame Stabilisatoren für Kunststoffe und kunststoffbasierende Anwendungen zu entwickeln.

Diese Aufgabe wird hinsichtlich der Verwendung spezifischer Materialien als Stabilisator mit den Merkmalen des Patentanspruchs 1, hinsichtlich einer spezifisch stabilisierten Kunststoffzusammensetzung mit den Merkmalen des Patentanspruchs 12 sowie hinsichtlich eines Verfahrens zur Stabilisation von organischen Materialien mit den Merkmalen des Patentanspruchs 13 gelöst. Die jeweilig abhängigen Patentansprüche stellen dabei vorteilhafte Weiterbildung dar.

Die vorliegende Erfindung betrifft somit die Verwendung einer Verbindung oder Mischungen mehrerer Verbindungen gemäß allgemeiner Formel I

A-B_{y} Formel I

wobei
das Fragment A die folgende Bedeutung aufweist 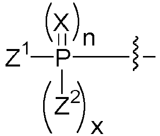
wobei jeweils unabhängig voneinander
   - X: ein Schwefelatom ist,
   - n: 0 oder 1 ist,
   - x: 0 oder 1 ist,
   - Z¹ und Z²: ausgewählt sind aus der Gruppe bestehend aus Wasserstoff, Alkylresten, Arylresten, Alkylarylresten, Arylalkylresten, heterocyclischen Resten, wobei an die zuvor genannten Reste eine oder mehrere weitere Fragmente A und/oder B gebunden sein können,
sowie einer Gruppierung -O-Z³, wobei Z³ ausgewählt ist aus Alkylresten, Arylresten, Alkylarylresten, Arylalkylresten, sowie heterocyclischen Resten,
sowie einer Gruppierung -S-Z⁴, wobei Z⁴ ausgewählt ist aus Alkylresten, Arylresten, Alkylarylresten, Arylalkylresten, sowie heterocyclischen Resten,
wobei im Falle von x = 1 die Reste Z¹ und Z² gemeinsam mit dem Phosphoratom ein Ringsystem bilden können, an das ein oder mehrere weitere Fragmente A und/oder B gebunden sein können,
das Fragment B die folgende Bedeutung aufweist 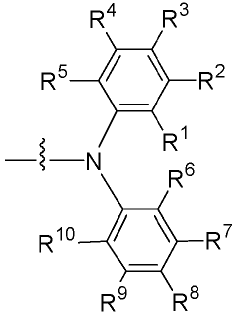
wobei jeweils unabhängig voneinander
R¹ bis R¹⁰ ausgewählt sind aus der Gruppe bestehend aus Wasserstoff, Alkylresten, Arylresten, Alkylarylresten, Arylalkylresten sowie heterocyclischen Resten, wobei (im Falle y = 1 oder 2), vorzugsweise im Falle y = 1, die Reste R¹ und R⁶ auch über eine die Phenylgruppen verbindende Gruppierung -Y- verbunden sein können, wobei Y ausgewählt ist aus der Gruppe bestehend aus S, O, NH, PH sowie einer kovalenten Bindung,
wobei die Fragmente A und B durch kovalente Bindung des Phosphor- und des Stickstoffatoms miteinander verbunden sind,
und wobei
y 1 oder 2 ist,
wobei gilt x + y =2,
zur Stabilisierung von organischen Materialien, insbesondere gegen oxidativen, thermischen und/oder actinischen Abbau.

Die Verbindung gemäß allgemeiner Formel I kann dabei als separates Molekül vorliegen, jedoch ebenso auch an einem polymeren Gerüst, sei es innerhalb der

Hauptkette, sei es in einer Nebenkette gebunden vorliegen.

Vorzugsweise sind Z¹ und Z² ausgewählt aus der Gruppe bestehend aus Wasserstoff, Alkylresten, Arylresten, Alkylarylresten, Arylalkylresten, heterocyclischen Resten, wobei an die zuvor genannten Reste eine oder mehrere weitere Fragmente A und/oder B gebunden sein können,
sowie einer Gruppierung -O-Z³, wobei Z³ ausgewählt ist aus Alkylresten, Arylresten, Alkylarylresten, Arylalkylresten, sowie heterocyclischen Resten,
wobei im Falle von x = 1 die Reste Z¹ und Z² gemeinsam mit dem Phosphoratom ein Ringsystem bilden können, an das ein oder mehrere weitere Fragmente A und/oder B gebunden sein können.

Überraschenderweise konnte gefunden werden, dass die Verbindungen gemäß der allgemeinen Formel I wie voranstehend definiert eine besonders gute Effizienz als Stabilisatoren von organischen Materialen aufweisen, so dass ihre Verwendung bereits in relativ niederer Konzentration zu hohen Stabilisierungsraten führt.

Insbesondere eignen sich die voranstehend beschriebenen Verbindungen zur Stabilisierung von Kunststoffen, Beschichtungen, Schmiermitteln, Hydraulikölen, Chemikalien, Monomeren.

Erfindungsgemäß ist es bei den voranstehend beschriebenen Verbindungen gemäß Formel I ist vorgesehen, dass das Fragment A ausgewählt ist aus den nachfolgenden Resten 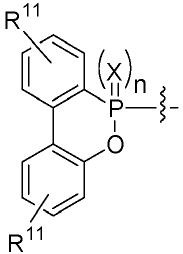 wobei gilt x = y = 1 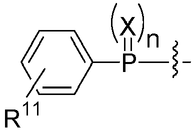 wobei gilt x = 0 und y = 2, oder 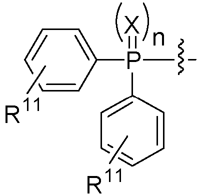 wobei gilt x = y = 1 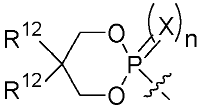 wobei gilt x = y = 1
wobei jeweils unabhängig voneinander
- R¹¹: ausgewählt ist aus der Gruppe bestehend aus Wasserstoff, Alkylresten, Arylresten, Alkylarylresten, Arylalkylresten sowie heterocyclischen Resten,
- R¹²: ausgewählt ist aus der Gruppe bestehend aus Wasserstoff, Alkylresten, Arylresten, Alkylarylresten, Arylalkylresten, heterocyclischen Resten, wobei die zuvor genannten Reste auch Heteroatome aufweisen können und/oder an die zuvor genannten Reste ein oder mehrere weitere Fragmente A und/oder B gebunden sein kann, und
- X und n: wie in voranstehend definiert sind.

Besonders bevorzugt ist das Fragment A ausgewählt aus den nachfolgenden Resten 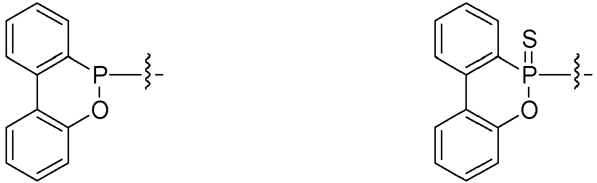
wobei jeweils gilt x = y = 1, 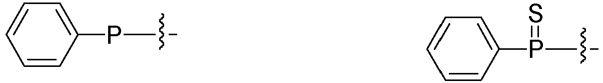
wobei jeweils gilt x = 0 und y = 2, sowie 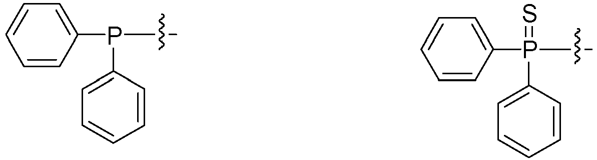
wobei jeweils gilt x = y = 1.

Hinsichtlich des Fragmentes B ist es vorteilhaft, wenn dieses ausgewählt ist aus der Gruppe bestehend aus den nachfolgenden Resten 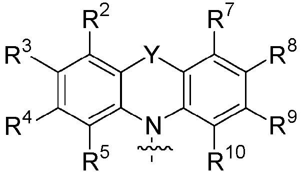 wobei gilt y = 1 oder 2, 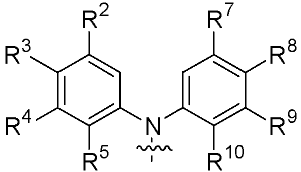 wobei gilt y = 1 oder 2, sowie 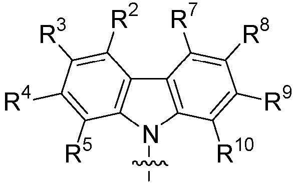 wobei gilt y =1 oder 2 wobei jeweils unabhängig voneinander R² bis R⁵ und R⁷ bis R¹⁰ und Y wie ins Anspruch 1 definiert sind.

Besonders bevorzugt hierbei ist, wenn das Fragment B ausgewählt ist aus der Gruppe bestehend aus den nachfolgenden Resten

Besonders bevorzugte Verbindungen, die für die Zwecke der vorliegenden Erfindung als Stabilisatoren verwendet werden können sind nachfolgend aufgelistet: 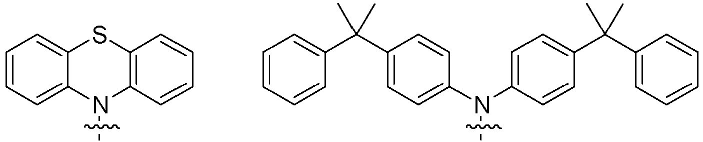 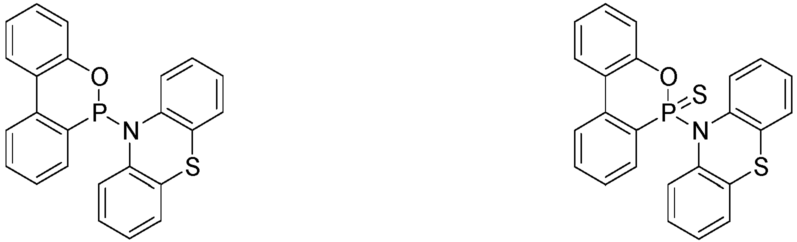 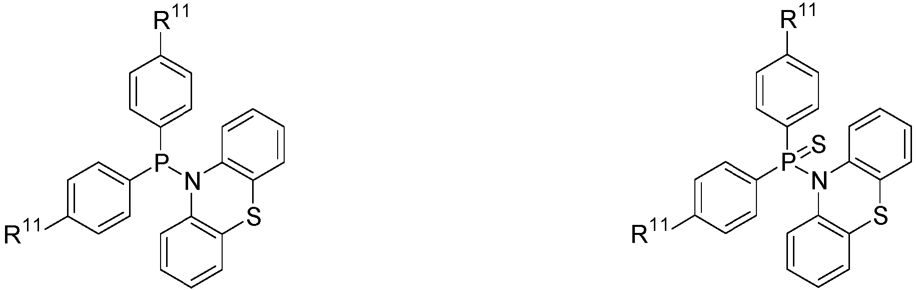 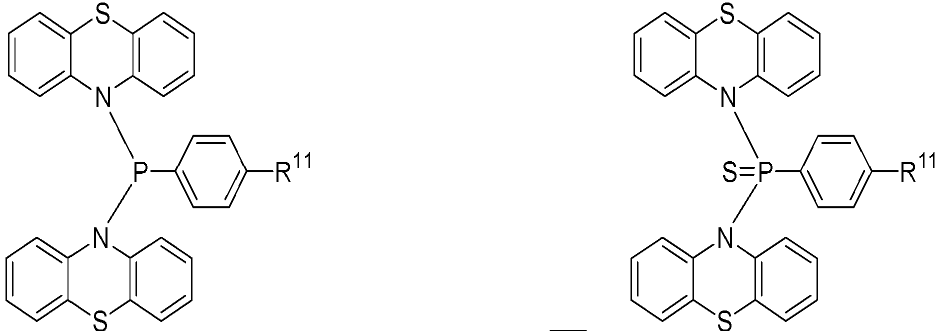 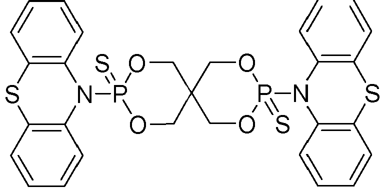 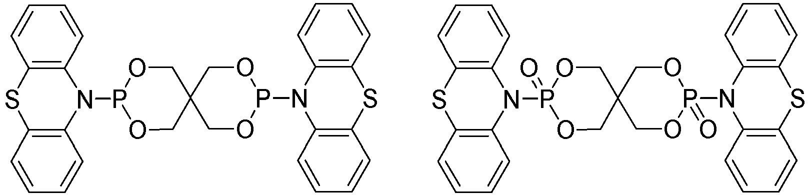 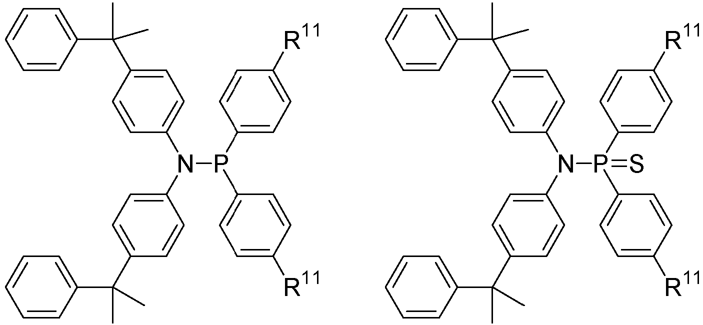 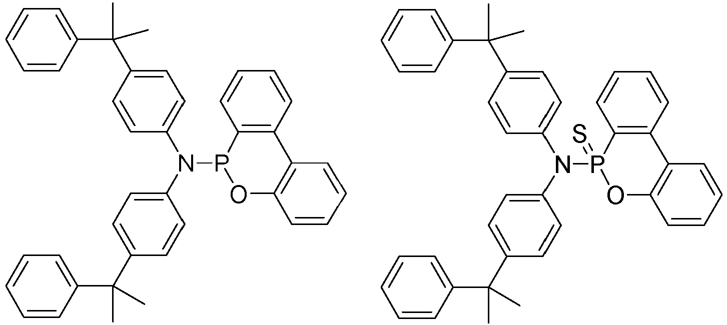 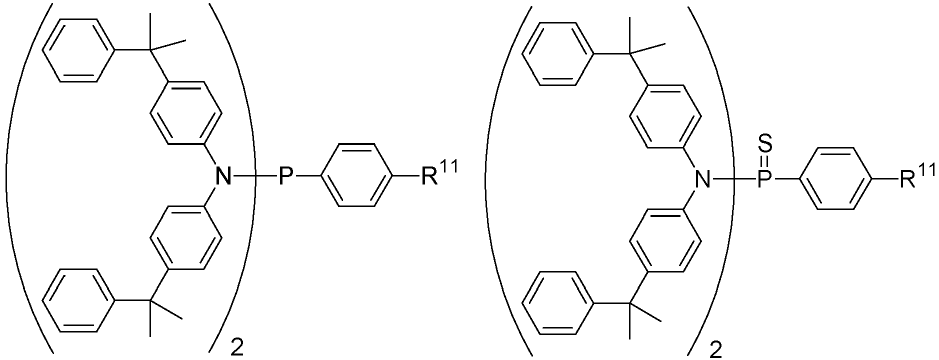 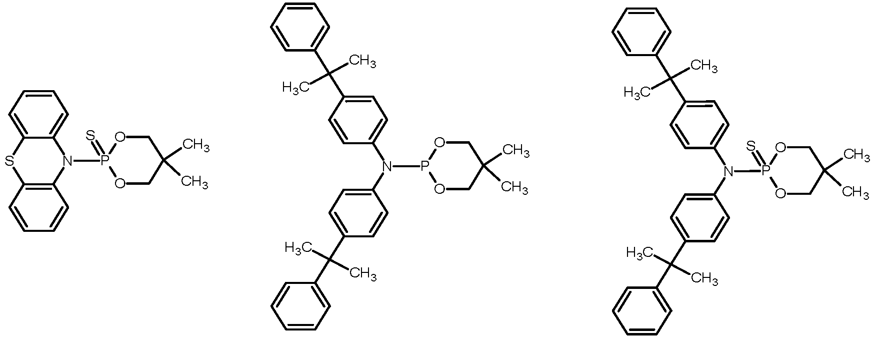 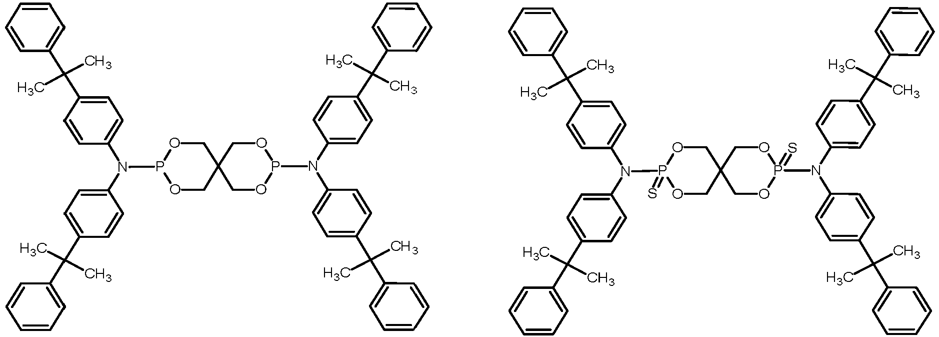 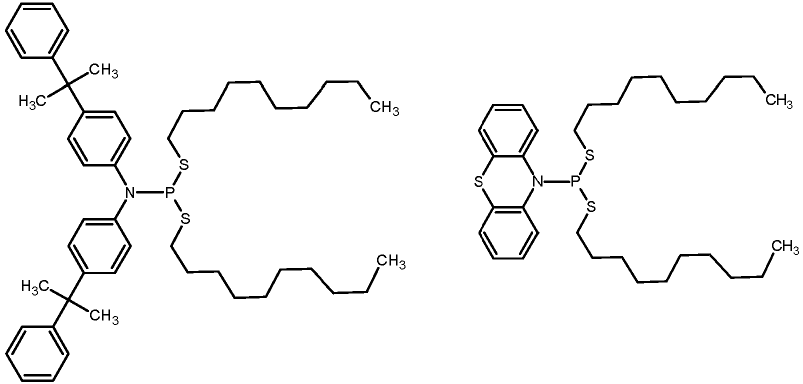 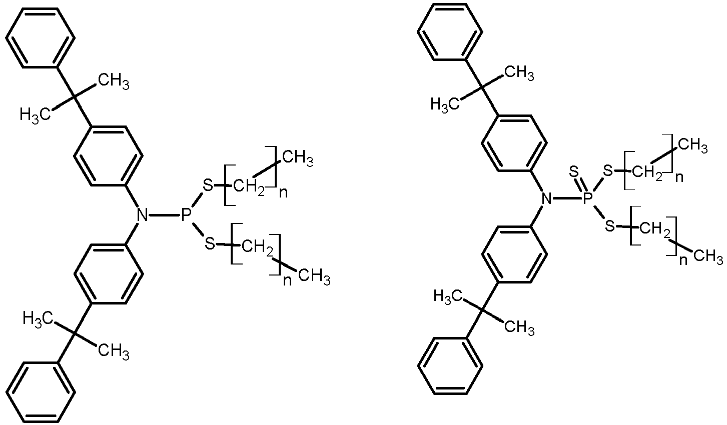 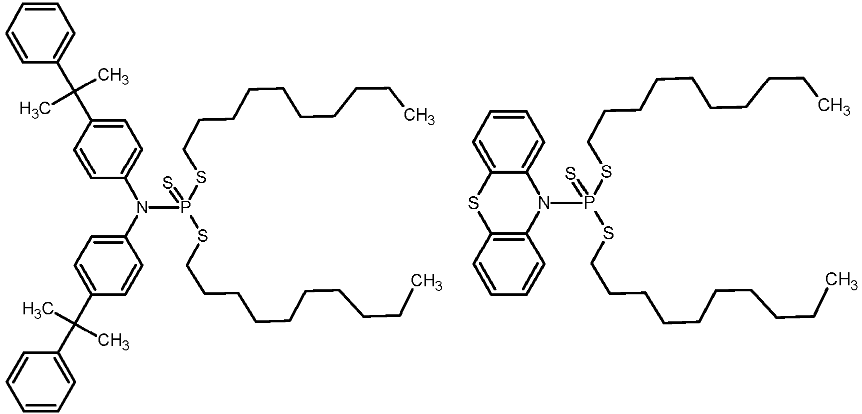 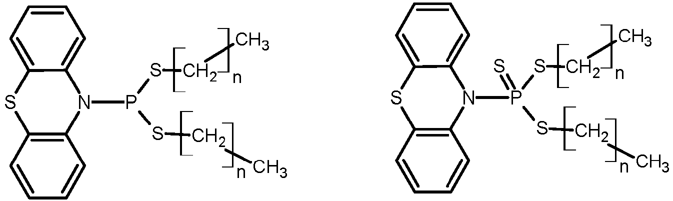 wobei jeweils unabhängig voneinander
R¹¹ ausgewählt ist aus der Gruppe bestehend aus Wasserstoff, Alkylresten, Arylresten, Alkylarylresten, Arylalkylresten sowie heterocyclischen Resten.

Die Verbindung gemäß allgemeiner Formel I oder im Falle einer Mischung mehrerer Verbindungen gemäß allgemeiner Formel I die Gesamtheit aller Verbindungen gemäß allgemeiner Formel I werden vorzugsweise zu einem Gewichtsanteil von 0,01 bis 10 Gew.-%, bevorzugt von 0,05 bis 5 Gew.-%, besonders bevorzugt von 0,1 bis 1,5 Gew.-% im organischen Material, d.h. des Materials, das einem oxidativen, thermischen und/oder actinischen Abbau unterliegt, zugegeben (inkorporiert) und/oder durch Vermischen eingearbeitet. Insbesondere im Fall von Kunststoffzusammensetzungen kann dies beispielsweise bei der thermischen Verarbeitung durch Aufschmelzen wie z.B. durch Kneten oder Extrusion dieser Materialien erfolgen. Bei flüssigen Materialen, wie beispielsweise Ölen, erfolgt die Einarbeitung der Verbindungen gemäß allgemeiner Formel I durch Lösen bzw. Dispergieren der Materialien in den Flüssigkeiten.

Für den Fall, dass die Verbindung gemäß allgemeiner Formel I zur Stabilisierung von Kunststoffmaterialien eingesetzt wird, ist es bevorzugt, wenn der Kunststoff ausgewählt wird aus der Gruppe bestehend aus
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, wie z.B. auch Naturkautschuk (NR), Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM mit z.B. 5-Ethyliden-2-Norbornen als Comonomer, EthylenVinylacetat (EVA), Ethylen-Acrylester, wie z.B. Ethylen-Butylacrylat, Ethylen-Acrylsäure und deren Salze (Ionomere), sowie Terpolymere wie z.B. Ethylen-Acrylsäure-Glycidyl(meth)acrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid sowie Blends wie z.B. LDPE/LLDPE oder auch langkettenverzweigte Polypropylen-Copolymere die mit alpha-Olefinen als Comonomere hergestellt werden wie z.B. mit 1-Buten, 1-Hexen, 1-Octen oder 1-Octadecen
b) Polystyrol, Polymethylstyrol, Poly-alpha-methylstyrol, Polyvinylnaphthalin, Polyvinylbiphenyl, Polyvinyltoluol, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS), sowie hydrierte Polystyrol-Derivate wie z.B. Polyvinylcyclohexan
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO)
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat,
e) Polymeren aus ungesättigten Alkoholen und Derivaten, wie z.B. Polyvinylalkohol, Polyvinylacetat, Polyvinylbutyral, Polyallylphthalat, Polyallylmelamin
f) Polyacetalen, wie z.B. Polyoxymethylen (POM) oder Copolymere mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i) Polyurethanen, aus hydroxyterminierten Polyethern oder Polyestern und aromatischen oder aliphatischen Isocyanaten wie z.B. 2,4- oder 2,6 Toluylendiisocyanat oder Methylendiphenyldiisocyanat insbesondere auch lineare Polyurethane (TPU), Polyharnstoffen,
j) Polyamiden wie z.B. Polyamid-6, 6.6, 6.10, 4.6, 4.10, 6.12, 10.10, 10.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen wie z.B. Hexamethylendiamin oder m-Xylylendiamin oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP
k) Polyimiden, Polyamid-imiden, Polyetherimiden, Polyesterimiden, Poly-(ether)ketonen, Polysulfonen, Polyethersulfonen, Polyarylsulfonen, Polyphenylensulfiden, Polybenzimidazolen, Polyhydantoinen,
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV), Polyethylensuccinat, Polytetramethylensuccinat, Polycaprolacton
m) Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze,
r) Silikonen, z.B. auf der Basis von Dimethylsiloxanen, Methyl-Phenyl-siloxanen oder Diphenylsiloxanen z.B. Vinylgruppen terminiert
s) sowie Mischungen, Kombinationen oder Blends aus zwei oder mehr der zuvor genannten Polymere.

Sofern es sich bei den unter a) bis r) angegebenen Polymeren um Copolymere handelt, können diese in Form von statistischen ("random"), Block- oder "tapered" Strukturen vorliegen. Weiterhin können die genannten Polymeren in Form von linearen, verzweigten, sternförmigen oder hyperverzweigten Strukturen vorliegen.

Sofern es sich bei den unter a) bis r) angegebenen Polymeren um stereoreguläre Polymere handelt, können diese in Form von isotaktischen, stereotaktischen, aber auch ataktischen Formen oder als Stereoblockcopolymere vorliegen.

Weiterhin können die unter a) bis r) angegebenen Polymere sowohl amorphe als auch (teil-)kristalline Morphologien aufweisen.

Ggf. können die unter a) genannten Polyolefine auch vernetzt vorliegen, z.B. vernetztes Polyethylen, das dann als X-PE bezeichnet wird.

Die genannten Polymeren a) bis r) können dabei nicht nur als Neuware sondern auch in Form von Rezyklaten vorliegen, z.B. als Produktionsabfälle oder aus Wertstoffsammlungen ("post-consumer" Rezyklate).

Zur begrifflichen Definition von Kunststoffrezyklaten sind in einer weiter bevorzugten Ausführungsform Rezyklat-Kunststoffe bzw. rezyklierte Kunststoffe. Zur begrifflichen Definition wird hierbei auf die Norm DIN EN 15347:2007 verwiesen, in der der Begriff Kunststoff-Rezyklat festgelegt ist. Diese Definition wird auch zum Zwecke der vorliegenden Erfindung zugrunde gelegt.

Besonders bevorzugt ist der recyclierte Kunststoff dabei ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen.

Weiterhin können die vorliegenden Verbindungen zur Stabilisierung von Kautschuken und Elastomeren eingesetzt werden. Hier kann es sich um Naturkautschuk (NR) oder synthetische Kautschukmaterialien handeln.

Handelt es sich bei den organischen Materialien um Öle und Fette, so können diese auf der Basis von Mineralölen, Pflanzenfetten oder Tierfetten sein oder auch Öle, Fette oder Wachse auf der Basis von z.B. synthetischen Estern. Planzliche Öle und Fette sind beispielsweise Palmöl, Olivenöl, Rapsöl, Leinöl, Sojabohnenöl, Sonnenblumenöl, Rizinusöl, Tierfette sind beispielsweise Fischöle oder Rindertalg.

Weiterhin können die erfindungsgemäßen Verbindungen zur Stabilisierung von niedermolekularen oder oligomeren Polyolen eingesetzt werden, wie sie z.B. bei der Polyurethan-Herstellung verwendet werden. Geeignete Hydroxyverbindungen sind beispielsweise Butan-1,4-diol, oligomere Ethylenglycole oder Tetrahydrofuran-Oligomere.

Die erfindungsgemäßen Verbindungen können weiterhin als Stabilisatoren von Schmierstoffen, Hydraulikölen, Motorenölen, Turbinenölen, Getriebeölen Metallbearbeitungsflüssigkeiten oder als Schmierfette eingesetzt werden. Diese mineralischen oder synthetischen Schmierstoffe basieren vorwiegend auf Kohlenwasserstoffen.

Möglich und vorteilhaft ist es hierbei, dass der Kunststoff, beispielsweise die Kunststoffformmasse mindestens ein weiteres Additiv , ausgewählt aus der Gruppe bestehend aus UV-Absorber, Lichtstabilisatoren, Hydroxylamin basierten Stabilisatoren, Benzofuranon basierten Stabilisatoren, Nukleierungsmittel, Schlagzähigkeitsverbesserer, Weichmacher, Gleitmittel, Rheologiemodifikatoren, Kettenverlängerer, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel sowie Antifoggingmittel, enthält.

Mögliche weitere Additive werden ausgewählt aus den Gruppen der UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Kettenverlängerer, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel oder Antifoggingmittel. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten. In einer weiteren bevorzugten Ausführungsform enthalten die Zusammensetzungen Stabilisatoren aus der Gruppe der phenolischen Antioxidantien und der Phosphite/Phosphonite, der Hydroxylamine, der Amine, der Lactone, der Thioverbindungen und/oder Lichtstabilisatoren aus der Gruppe der gehinderten Amine (HALS) und/oder UV-Absorber.

Geeignete Lichtstabilisatoren sind beispielsweise Verbindungen auf der Basis von 2-(2'-Hydroxyphenyl)-benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-tert-butyl-2'-hydroxyphenyl)-benzotriazol, 2-(5'-tert-Butyl-2'-hydroxy-phenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlorobenzotriazol, 2-(3'-tert-Butyl-2'-hydroxy-5'-methylphenyl-5-chlorobenzotriazol, 2-(3'-sec-Butyl-5'-tert-butyl-2'-hydroxy-phenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonylethyl)phenyl)-5-chlorobenzotriazol, 2-(3'-tert-Butyl-5'-[2-(2-ethylhexyloxy)carbonylethyl]-2'-hydroxyphenyl)-5-chlorobenzotriazol, 2-(3'-tert-Butyl-2'-hydroxy-5'-(2-methoxycarbonylethyl) phenyl)-5-chlorobenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyloxycarbonylethyl) phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl) benzotriazol, 2-(3'-tert-Butyl-2'-hydroxy-5'-(2-isooctyloxycarbonylethyl)phenylbenzotriazol, 2,2'-Methylenbis [4-(1,1,3,3-tetramethylbutyl)-6-benzotriazol-2-ylphenol]; das Produkt der Umesterung von 2-[3'-tert-Butyl-5'-(2-methoxycarbonylethyl)-2'-hydroxyphenyl]-2H-benzotriazol mit Polyethylenglycol 300; [R-CH2CH2-COO-CH2CH2-]-2, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(a,a-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-tert-Butylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-tert-butoxanilid, 2,2'-didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und seine Mischungen mit 2-Ethoxy-2'-ethyl-5,4'-di-tert-butoxanilid, Mischungen von o- und p-Methoxy-disubstituierten Oxaniliden und Mischungen von o- und p-Ethoxy-disubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypro-pyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl-1,3,5-triazin.

Geeignete phenolische Antioxidantien sind beispielsweise:
Alkylierte Monophenole, wie z.B. 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-tert-butyl-4-methyoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis(3,5-di-tert-butyl-4-hydroxylphenyl)adipat; Tocopherole, wie z.B. α-, β-, γ-, δ-Tocopherol und Mischungen aus diesen (Vitamin E);
hydroxylierte Thiodiphenylether, wie z.B. 2,2'-Thiobis(6-tert-butyl-4-methylphenol), 2,2'-Thiobis(4-octylphenol), 4,4'-Thiobis(6-tert-butyl-3-methylphenol), 4,4'-Thiobis(6-tert-butyl-2-methylphenol), 4,4'-Thiobis(3,6-di-secamylphenol), 4,4'-Bis(2,6-dimethyl-4-hydroxyphenyl)disulfid; Alkylidenbisphenole, wie z.B. 2,2'Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-tert-butylphenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol, 4,4'-Methylenbis(6-tert-butyl-2-methylphenol), 1,1-bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-bis(5-tert-butyl-4-hydroxy-2-methylphenyl)-3-n-dodecyl-mercaptobutan, Ethylenglycol-bis[3,3-bis(3'-tert-butyl-4'-hydroxyphenyl)butyrat], Bis(3-tert-butyl-4-hydroxy-5-methylphenyl)dicyclopentadien, Bis[2-(3'-tert-butyl-2'-hydroxy-5'-methylbenzyl)-6-tert-butyl-4-methylphenyl]terephthalat, 1,1-Bis-(3,5-dimethyl-2-hydroxyphenyl)butan, 2,2-Bis(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra(5-tert-butyl-4-hydroxy-2-methylphenyl)pentan;
O-, N- und S-Benzyl-Verbindungen, wie z.B. 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, , Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat; hydroxybenzylierte Malonate, wie z.B. Dioctadecyl-2,2-bis(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat;
aromatische Hydroxybenzylverbindungen, wie z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)phenol;
Triazinverbindungen, wie z.B. 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxphenylethyl)-1,3,5-triazin, 1,3,5-Tris(3,5-di-tert-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-tert-butyl-4-hydroxybenzylphosphonat, Dietyhl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, das Calciumsalz des Monoethylesters der 3,5-Di-tert-butyl-4-hydroxybenzylphosphonsäure;
Acylaminophenole, wie z.B. 4-Hydroxylauranilid, 4-Hydroxystearanilid, Octyl-N-(3,5-di-tert-butyl-4-hydroxyphenyl)carbamat;
Ester der β-(3,5-Di-tert-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der β-(5-tert-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-tert-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-tert-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-tert-butyl-4-hydroxyphenyl)propionsäure, wie z.B. N,N'-Bis(3,5-di-tert-butyl-4-hydroxyphenylpropionyl)hexamethylendiamid, N,N'-Bis(3,5-di-tert-butyl-4-hydroxyphenylpropionyl) hexamethylendiamid, N,N'-Bis(3,5-di-tert-butyl-4-hydroxyphenylpropionyl)hexamethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl] propionyloxy)ethyl]oxamid; Ascorbinsäure (Vitamin C).
Besonders bevorzugte phenolische Antioxidantien sind die folgenden Strukturen:

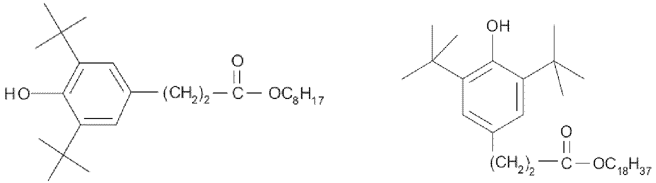

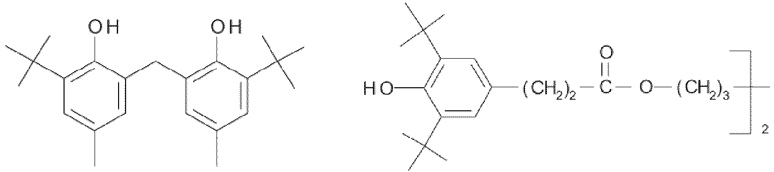

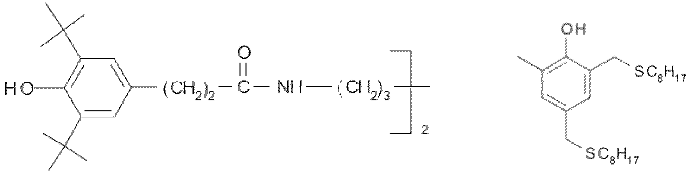

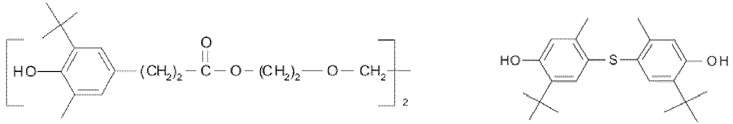

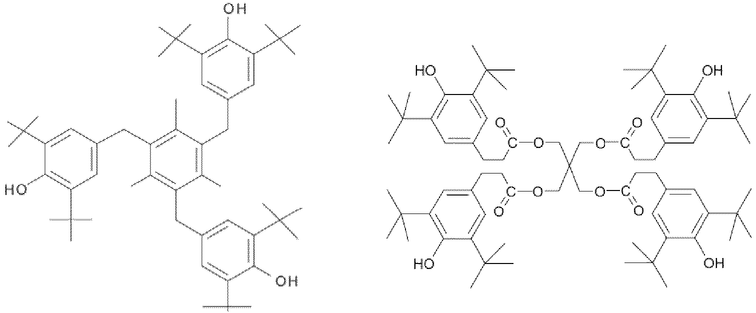

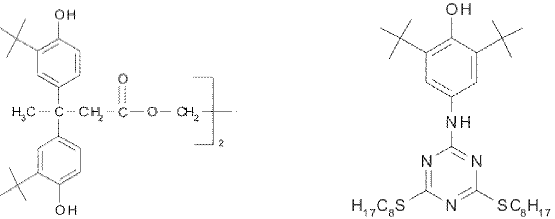

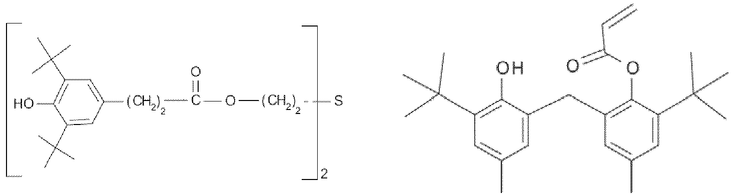

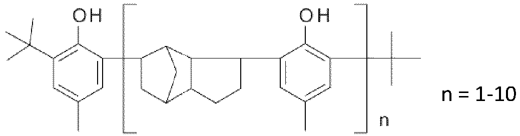

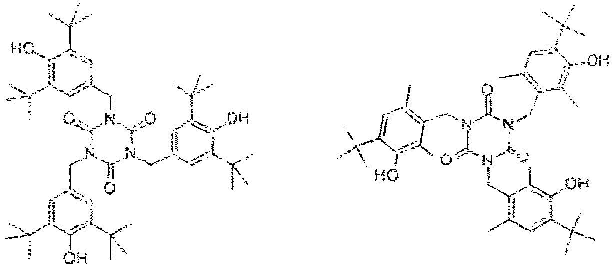

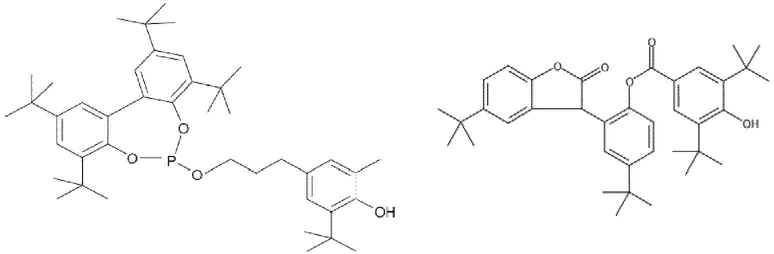

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-tert-butylphenyl) phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl) ethylphosphit, 6-Fluoro-2,4,8,10-tetra-tert-butyl-12-methyl-dibenz[d,g]-1,3,2-dioxaphosphocin, 2,2'2''-Nitrilo[triethyltris(3,3'',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl))phosphit, 5-Butyl-5-ethyl-2-(2,4,6-tri-tert-butylphenoxy)-1,3,2-dioxaphosphiran.

Weitere geeignete Phosphite sind die Handelsprodukte Weston 705 (Hersteller: Addivant) und Doverphos LGP 11 (Hersteller: Dover Chemical Corporation), wobei es sich um flüssige Phosphite handelt.

Besonders bevorzugte Phosphite/Phosphonite sind: 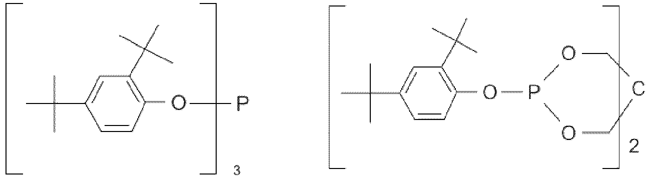 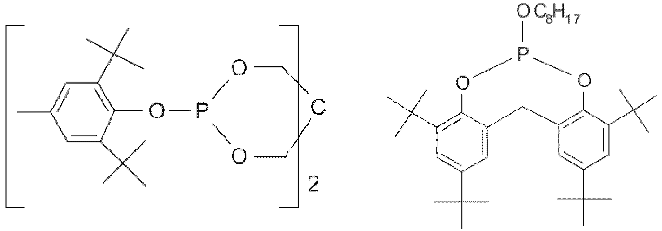 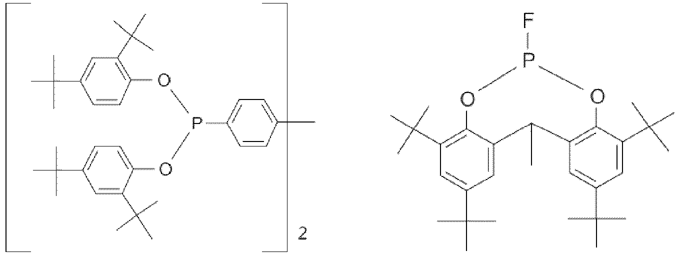 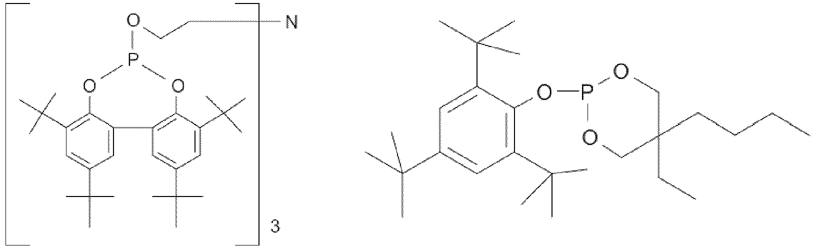 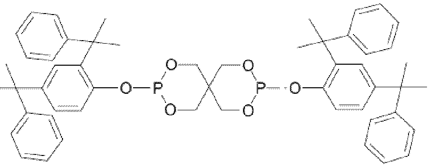 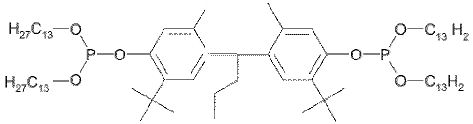 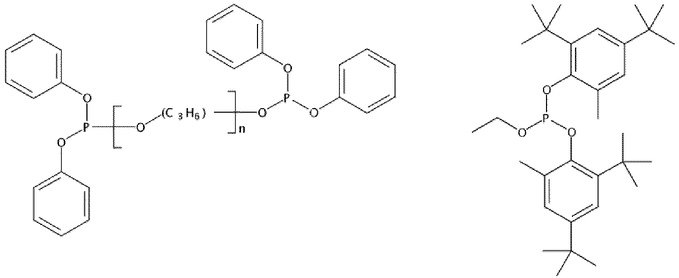 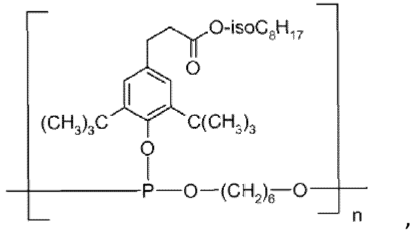 wobei n > 1

Geeignete aminische Antioxidantien sind beispielsweise:
N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)phenyl]amin, *tert*-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert-*Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel: 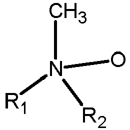 R₁, R₂ = C₁₄- C₂₄ Alkyl
Genox EP

Weitere geeignete Stabilisatoren sind Thiosynergisten. Geeignete Thiosynergisten sind beispielsweise Distearylthiodipropionat, Dilaurylthiodipropionat, oder die Verbindung gemäß der folgenden Formel:

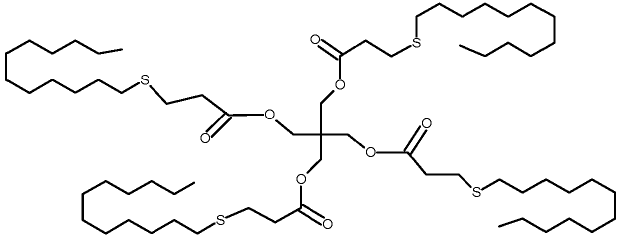

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl) hexamethylendiamin und 4-*tert*-Octylamino-2,6-di-chloro-1,3,5-triazin, Tris(2,2,6,6-tetramethyl-4-piperidyl)nitrilotriacetat, Tetrakis(2 ,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Bevorzugte gehinderte Amine weisen weiterhin die folgenden Strukturen auf:

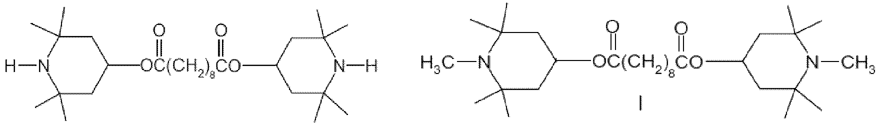

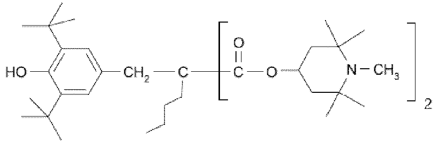

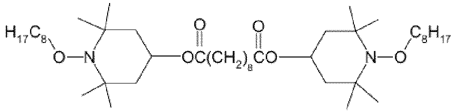

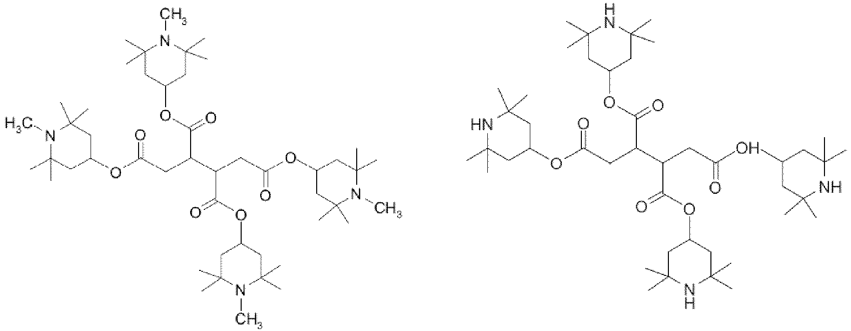

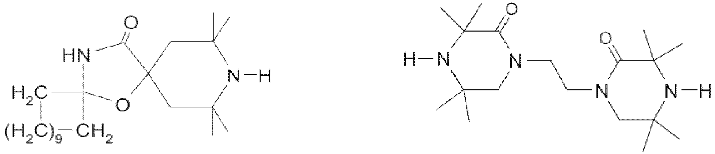

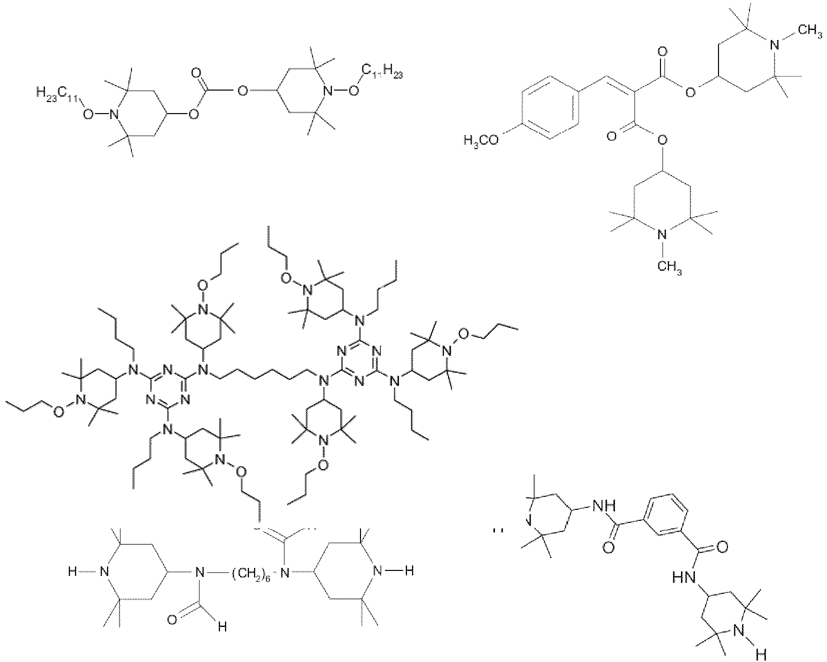

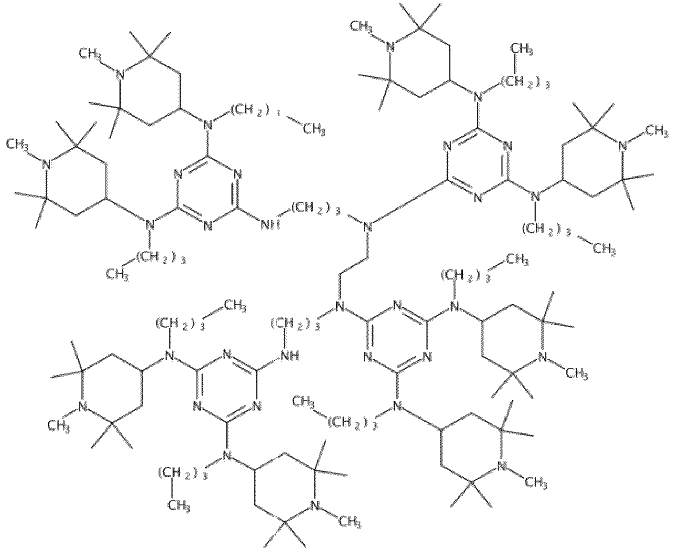

Bevorzugte oligomere und polymere gehinderte Amine weisen die folgenden Strukturen auf:

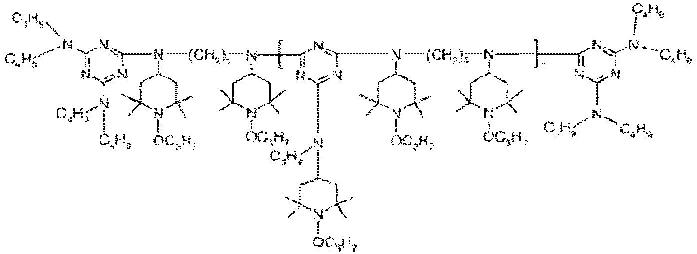

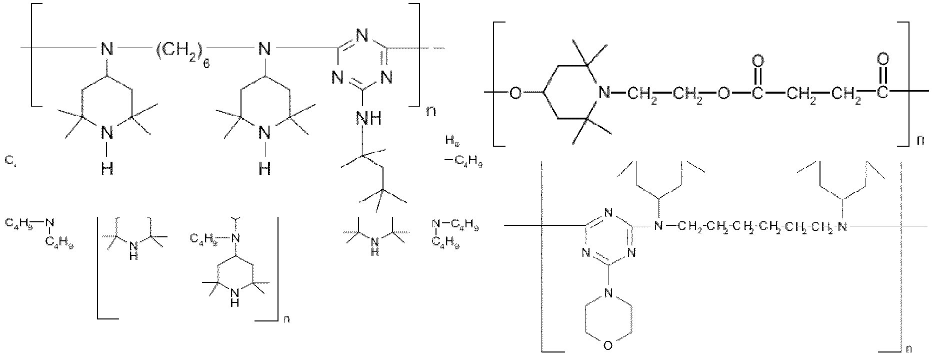

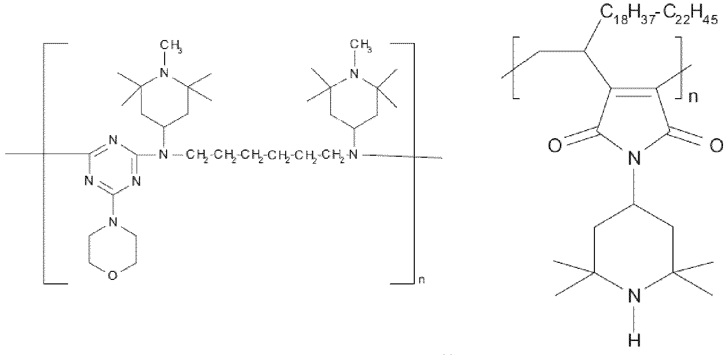

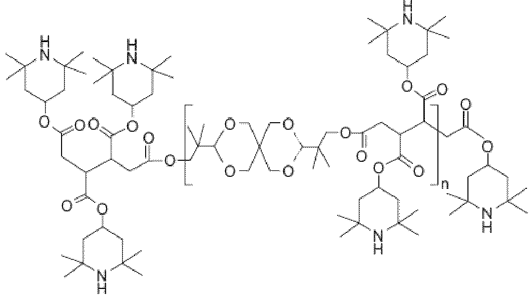

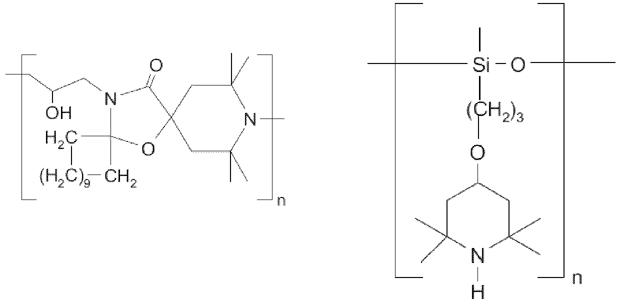

Geeignete Lactone sind bespielsweise: 5,7-di-tert-butyl-3-(3,4-dimethylphenyl)-3H-benzofuran-2-on, 5,7-di-tert-butyl-3-[-4-(2-stearoyloxyethoxy)phenyl]-benzofuran-2-on, 3-(4-acetoxy-3,5-dimethylphenyl)-5,7-di-tert-butyl-benzofuran-2-on), sowie phosphorhaltige 3-Phenylbenzofuran-2one.

Geeignete Metalldeaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldihydrazid, N,N'-Bis(salicyloyl)thiopropionyldihydrazid.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminiumhydroxy-bis(4-tert-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide und Diamide wie z.B. Trimesinsäuretricyclohexylami, Trimesinsäuretri(4-methylcyclohexylamid), Trimesinsäure tri(tert.butylamid), N,N',N"-1,3,5-Benzoltriyltris(2,2-dimethyl-propanamid) oder 2,6-Naphthalindicarbosäuredicyclohexylamid.

Geeignete Antinukleierungsmittel sind beispielsweise Azinfarbstoffe wie z.B. Nigrosin, ionische Flüssigkeiten und/oder Lithiumsalze.

Geeignete Flammschutzmittel sind beispielsweise:
a) Anorganische Flammschutzmittel wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) Stickstoffhaltige Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z.B. Alkoxyamine, Hydroxylaminester, Azoverbindungen, Sulfenamide, Sulfenimide, Dicumyl oder Polycumyl, Hydroxyimide und deren Derivate wie z.B. Hydroxyimidester oder Hydroxyimidether
d) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltige Flammschutzmittel auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen-bis(tetrabromophthalimid), Tetrabromo-bisphenol A, bromiertes Polystyrol, bromiertes Polybutadien bzw, Polystyrol-bromiertes Polybutadien-Copolymere, bromierter Polyphenylenether, bromiertes Epoxidharz, Polypentabrombenzylacrylat, ggf. in Kombination mit Sb₂O₃ und/oder Sb₂O₅,
f) Borate wie z.B. Zinkborat oder Calciumborat, ggf. auf Trägermaterial wie z.B. Silica
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) Siliciumhaltige Verbindungen wie z.B. Polyphenylsiloxane,
j) Kohlenstoffmodifikationen wie z.B. Carbon-Nanoröhren (CNT), Blähgraphit oder Graphen
k) sowie Kombinationen oder Mischungen hieraus.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit, Halloysit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, (Poly-)Carbodiimide. Weitere geeignete Kettenverlängerer sind polymere Verbindungen wie z.B. Polystyrol-Polyacrylat-Polyglycidyl(meth)acrylat-Copolymere, Polystyrol-Maleinsäureanhydrid-Copolymere und Polyethylen-Maleinsäureanhydrid-Copolymere.

Geeignete Optische Aufheller sind beispielsweise Bisbenzoxazole, Phenylcumarine oder Bis(styryl)biphenyle und insbesondere optische Aufheller der Formeln:

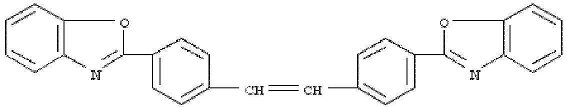

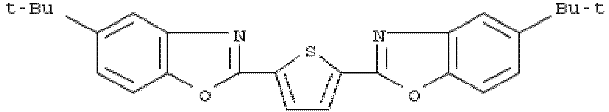

Geeignete Füllstoffdeaktivatoren sind beispielsweise Polysiloxane, Polyacrylate insbesondere Blockcopolymere wie Polymethacrylsäure-polyalkylenoxid oder Polyglycidyl(meth)acrylate und deren Copolymere z.B. mit Styrol sowie Epoxide z.B. der folgenden Strukturen:

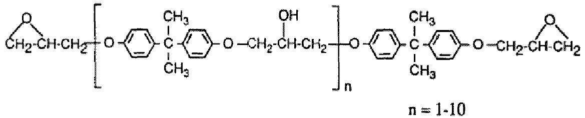

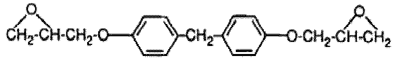

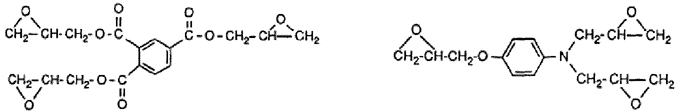

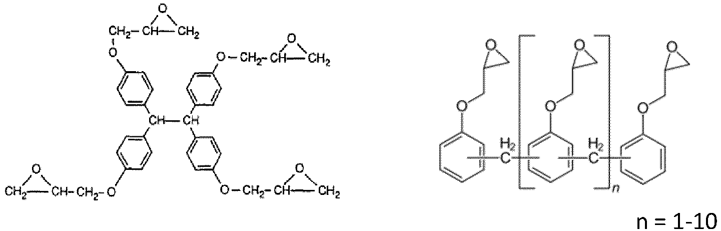

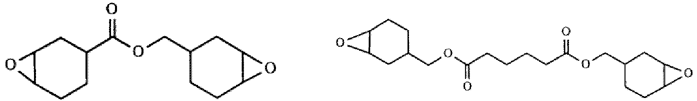

Geeignete Antistatika sind beispielsweise ethoxylierte Alkylamine, Fettsäureester, Alkylsulfonate und Polymere wie z.B. Polyetheramide.

Geeignete Antiozonantien sind die oben genannten Amine wie z.B. N,N'-Diisopropyl-p-phenylendiamin, N,N'-Di-sec-butyl-p-phenylendiamin, N,N'-Bis(1,4-dimethylpentyl)-p-phenylendiamin, N,N'-Dicyclohexyl-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin.

Geeignete Entformungshilfsmittel sind beispielsweise Montanwachse.

Die Einarbeitung der Stabilisatoren und/oder der Additivzusammensetzung und ggf. der zusätzlichen Additive in den Kunststoff erfolgt durch übliche Verarbeitungsmethoden, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen wie z.B. unter Stickstoff als Schutzgas erfolgen.

Weiterhin können die Additivzusammensetzungen in Form von Masterbatchen oder Konzentraten, die beispielsweise 20-90 % der erfindungsgemäßen Additive oder der Additiv-Zusammensetzungen in einem Polymeren enthalten, hergestellt und eingebracht werden. Weiterhin bevorzugt sind Konzentrate die aus dem Additiv und/oder der Additivzusammensetzung und einem Gleitmittel bestehen. Das Gleitmittel ist bevorzugt ein Salz einer langkettigen Fettsäure wie z.B. Calciumstearat, Magnesiumstearat oder Zinkstearat, ein Polyethylenwachs oder ein Polypropylenwachs. Diese Konzentrate können dann in Form von kompaktierten, granulierten oder extrudierten Produktformen vorliegen.

Weiter ist es vorteilhaft, wenn zur Stabilisierung der organischen Materialien zusätzlich zur Verbindung gemäß allgemeiner Formel I mindestens ein weiteres primäres und/oder sekundäres Antioxidans, insbesondere mindestens ein weiteres primäres und/oder sekundäres Antioxidans ausgewählt aus der Gruppe bestehend aus phenolischen Antioxidantien, Phosphiten, Phosphoniten, Aminen, Hydroxylaminen sowie Mischungen oder Kombinationen hiervon eingesetzt wird.

Für den Fall, dass es sich bei den organischen Materialen um Kunststoffzusammensetzungen bzw. Polymerzusammensetzungen handelt, die die erfindungsgemäßen Stabilisatoren beinhalten, eignen sich diese insbesondere zur Weiterverarbeitung zu speziellen Formteilen, wie z.B. Spritzgussteilen, Folien oder Filmen, Schäumen, Fasern, Kabeln und Rohren, Profilen, Hohlkörpern, Bändchen, Membranen, wie z.B. Geomembranen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Diese Formteile zählen ebenso zur vorliegenden Erfindung.

Bevorzugt bestehen die erfindungsgemäßen Zusammensetzungen aus 0,01-5,0 Gew% der erfindungsgemäßen Stabilisatoren gemäß allgemeiner Formel I, 0-5,0 % eines weiteren Additivs und 95-99,99 Gew% eines Polymeren, besonders bevorzugt 0,02-3 Gew % der erfindungsgemäßen Stabilisatoren, 0-3,0 % eines weiteren Additivs und 97-99,98 % eines Polymeren, ganz besonders bevorzugt sind 0,05- 2 Gew% der erfindungsgemäßen Stabilisatoren, 0-2 Gew% eines weiteren Additivs und 98-99,95 Gew% eines Polymeren.

Die vorliegende Erfindung betrifft zudem ein organisches Material, das zu Zwecken der Stabilisierung mindestens eine Stabilisator oder eine Mischung mehrerer Stabilisatoren gemäß allgemeiner Formel I, wie voranstehend definiert, beinhaltet. Für die Zwecke des entsprechend stabilisierten organischen Materials gelten sämtliche dazu vorgenannten Ausführungen zur allgemeinen Formel I in gleicher Weise. In besonders bevorzugter Weise handelt es sich bei dem organischen Material um eine Kunststoffzusammensetzung, insbesondere mit den Polymeren wie zuvor stehend beschrieben.

Zudem betrifft die Erfindung ein Verfahren zur Stabilisierung von organischen Materialen, insbesondere Kunststoffzusammensetzungen, besonders bevorzugt gegen oxidativen, thermischen und/oder actinischen Abbau, bei dem eine Verbindung oder mehrere Verbindungen gemäß allgemeiner Formel I in das organische Material eingearbeitet wird. Die Einarbeitung kann dabei auf beliebige durch den Stand der Technik bekannte Weise erfolgen.

Die vorliegende Erfindung wird anhand der nachfolgenden Beispiele näher erläutert.

### Synthese der neuen Stabilisatoren:

Das für die Synthesen verwendete absolute Toluol (99.8%), Lithiumdiisopropylamid (LDA) sowie der elementare Schwefel (p.a., ≥ 99.5%) wurden von Sigma Aldrich, Phenothiazin (98+%) von Alfa Aesar, Acetonitril, wasserfreier Diethylether sowie die 1,6-molare (15%ige) n-Butyllithium-Lösung in n-Hexan von Merck KGaA erworben und Chlordiphenylphosphin von der BASF zur Verfügung gestellt. Die Verbindung 4,4'-Bis(α,α-dimethylbenzyl)diphenylamin (BDBDA) wurde von der Firma TCI Tokyo Kasei bezogen sowie absolutes Tetrahydrofuran von Acros Organics. 2-Chlor-5,5-dimethyl-1,3,2-dioxa-phosphorinan (DDP-Cl) wurde auf literaturbekannte Weise aus Phosphortrichlorid und 1,3-Dimethylpropan-1,3-diol synthetisiert.

### Ausführungsbeispiel 1

### Synthese von Phenothiazin-DOP:

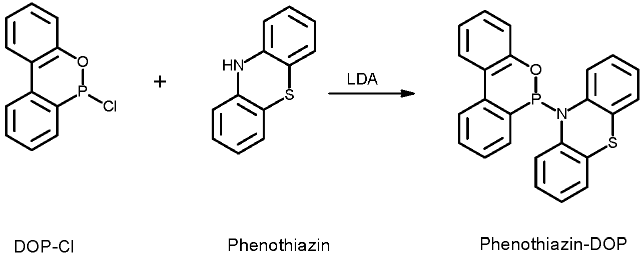

In einen sorgfältig getrockneten und mit Stickstoff gefüllten 500 ml Dreihalskolben, der mit Magnetrührer, Stickstoffzufuhr und Tropftrichter mit Druckausgleich ausgestattet war, wurden absolutes Toluol (150 ml) und 47.3 g einer 2-molaren Lithiumdiisopropylamid-Lösung in THF (LDA; 0.095 mol) mittels einer Spritze durch ein Septum zugegeben. Anschließend wurde Phenothiazin (17.93 g, 0.090 mol) im Stickstoffgegenstrom hinzugefügt. In den leicht erwärmten Tropftrichter wurden absolutes Toluol (120 mL) mittels einer Spritze durch ein Septum sowie geschmolzenes DOP-CI (21.23 g, 0.090 mol) im Stickstoffgegenstrom gegeben (Die Flasche mit dem DOP-CI wurde zuvor auf etwa 100°C erwärmt um das Reagenz aufzuschmelzen). Die DOP-Cl-Lösung wurde innerhalb von 30 min unter Rühren bei Raumtemperatur tropfenweise zugegeben. Anschließend wurde die Reaktionsmischung noch 1 h bei Raumtemperatur gerührt. Nachdem sich die Feststoffe (vorwiegend Lithiumchlorid) am Boden des Kolbens bzw. der Kolbenwand abgeschieden hatten, wurde die überstehende Lösung unter Inert-Bedingungen dekantiert. Zum Rückstand wurden 80 ml absolutes Toluol mittels einer Spritze durch ein Septum gegeben. Es wurde 30 min bei 45 °C gerührt und nach Absetzen des Feststoffs dekantiert. Beide Lösungen wurden vereinigt, und das Toluol wurde im Vakuum entfernt. Der erhaltene Rückstand wurde in 80 ml trockenem Acetonitril unter Erwärmen gelöst. Beim Abkühlen schied sich das Phenothiazin-DOP aus. Nach Lagern des gut verschlossenen Kolbens im Kühlschrank (ca. 15 h) wurde die überstehende Lösung durch Dekantieren abgetrennt. Schließlich wurde das anhaftende Lösungsmittel im Vakuum entfernt. Auf diese Weise wurde Phenothiazin-DOP mit einer Ausbeute von 78 % als weißer Feststoff erhalten.

³¹P-NMR (300 MHz, CDCl₃, **8)** δ = 94.2 ppm. ¹H-NMR (300 MHz, CDCl₃, **8)** δ = 7.86 - 6.77 (m, 16.3H) ppm.

### Ausführungsbeispiel 2

### Synthese von Phenothiazin-DOPS:

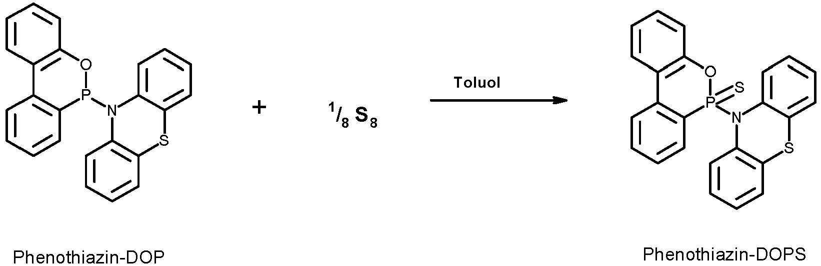

In einen sorgfältig getrockneten und mit Stickstoff gefüllten 250 ml Dreihalskolben, der mit Magnetrührer und Stickstoffzuleitung ausgestattet war, wurden 60 ml absolutes Toluol mittels einer Spritze durch ein Septum sowie Phenothiazin-DOP (4.97 g, 0.013 mol) und elementarer Schwefel (0.43 g, 0.013 mol) im Stickstoffgegenstrom zugegeben. Die Reaktionsmischung wurde zunächst 3 h bei 80 °C, dann 30 min bei 90 °C gerührt. Nach dem Entfernen des Toluols durch Destillation im Vakuum wurde ein kristalliner Feststoff erhalten. Die NMR-spektroskopische Untersuchung zeigte, dass die Schwefelungsreaktion unter Bildung von Phenothiazin-DOPS vollständig erfolgt war.

³¹P-NMR (300 MHz, CDCl₃, **14)** δ = 67.4 ppm.¹H-NMR (300 MHz, CDCl₃, **14)** δ = 8.11 - 6.95 (m, 17.5H) ppm.

### Ausführungsbeispiel 3

### Synthese von Phenothiazin-PPh2:

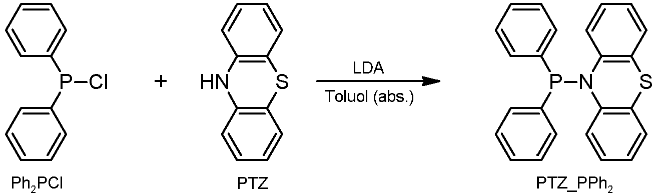

In einen sorgfältig getrockneten und mit Stickstoff gefüllten 250 ml Dreihalskolben, der mit Magnetrührer, Tropftrichter und Stickstoffzuleitung ausgestattet war, wurden absolutes Toluol (40 ml) und LDA (7 ml, 0.014 mol) mittels einer Spritze durch ein Septum sowie Phenothiazin (2.39 g, 0.012 mol) im Stickstoffgegenstrom zugegeben, zum Lösen auf ca. 40 °C erhitzt und danach im Eisbad gekühlt. Anschließend wurden absolutes Toluol sowie Chlordiphenylphosphin (2.65 g, 0.012 mol) mittels einer Spritze durch ein Septum im Stickstoffgegenstrom in einen Tropftrichter gegeben und innerhalb von 10 Minuten hinzugetropft. Die Reaktionsmischung wurde 1 h im Eisbad gerührt. Die NMR-spektroskopische Untersuchung aus der Reaktionslösung zeigte, dass das gewünschte Produkt entstanden war.

31P-NMR (300 MHz, CDCl3) δ = 70.3 ppm. 1H-NMR (300 MHz, CDCl3) δ = 7.66 - 6.56 ppm.

### Ausführungsbeispiel 4

### Synthese von Phenothiazin-PPh2S:

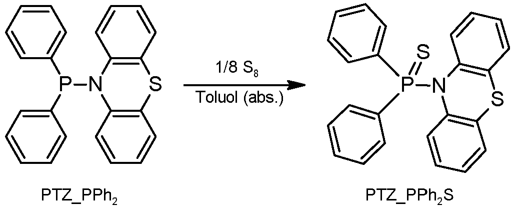

In einen sorgfältig getrockneten und mit Stickstoff gefüllten 250 ml Dreihalskolben, der mit Magnetrührer, Rückflusskühler und Stickstoffzuleitung ausgestattet war, wurden absolutes Toluol (60 ml) mittels einer Spritze durch ein Septum und elementarer Schwefel (0.42 g, 0.013 mol) im Stickstoffgegenstrom zur in Ausführungsbeispiel 3 erhaltenen Reaktionslösung gegeben. Die Reaktionsmischung wurde 3 h bei 80 °C gerührt und über Nacht im Kühlschrank (2 °C) gelagert. Der Niederschlag wurde abfiltriert, das Filtrat durch Entfernen des Toluols mittels Destillation im Vakuum eingeengt, wieder gekühlt und der Niederschlag erneut abfiltriert. Anschließend wurde das Produkt aus Acetonitril umkristallisiert. Die Ausbeute betrug 2.74 g (54%). Die NMR-spektroskopische Untersuchung zeigte, dass die Schwefelungsreaktion unter Bildung von Phenothiazin-PPh2S vollständig erfolgt war.

³¹P-NMR (300 MHz, CDCl₃) δ = 62.6 ppm. ¹H-NMR (300 MHz, CDCl3) δ = 8.17 - 6.89 ppm.

### Ausführungsbeispiel 5

### Synthese von Phenothiazin-DDP:

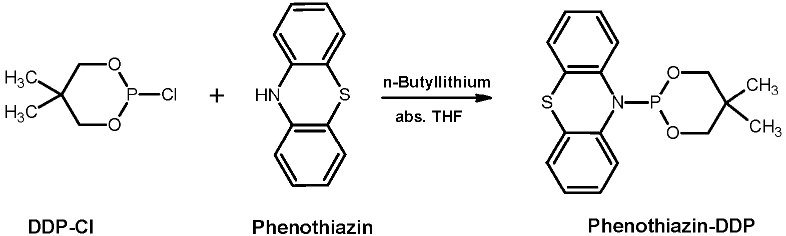

In einen sorgfältig getrockneten und mit Argon gefüllten 100 ml Dreihalskolben, der mit Magnetrührer, Septum und Argonzuleitung ausgestattet war, wurden absolutes THF (40 ml) sowie Phenothiazin (2.99 g, 0.015 mol) gegeben. Dann wurden 9,4 ml einer 15%igen Lösung von n-Buthyllithium in n-Hexan (0.015 mol) mittels einer Spritze durch das Septum unter Rühren hinzugefügt. Nachdem der Kolbeninhalt 20 min gerührt worden war, wurde 2-Chloro-5,5-dimethyl-1,3,2-dioxaphosphorinan (DDP-Cl, 2.52 g, 0.015 mol) mittels einer Spritze durch das Septum innerhalb von 10 Minuten hinzugetropft. Die Reaktionsmischung wurde 2 h bei Raumtemperatur gerührt. Die NMR-spektroskopische Untersuchung der Reaktionslösung zeigte, dass Phenothiazin-DDP entstanden war.

³¹P-NMR (300 MHz, CDCl₃) δ = 127.0 ppm.

### Ausführungsbeispiel 6

### Synthese von Phenothiazin-DDPS:

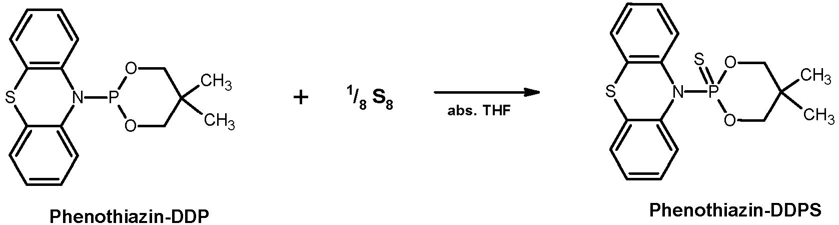

Zu der in Ausführungsbeispiel 5 erhaltenen Lösung von Phenothiazin-DDP in THF wurde elementarer Schwefel (0.48 g, 0.015 mol) im Argongegenstrom gegeben. Dann wurde 3 h bei 50 °C gerührt. Danach wurde das Lösemittel im Vakuum entfernt, und der Rückstand wurde aus Acetonitril umkristallisiert. Die Ausbeute an spektroskopisch reinem Phenothiazin-DDPS betrug 85%.
³¹P-NMR (300 MHz, CDCl₃) δ = 56.1 ppm. ¹H-NMR (300 MHz, CDCl₃) δ = 7.94 - 7.14 (m, 8.5 H, Ar), 3.83 - 3.57 (m, 4 H, CH₂), 1.23 (s, 3 H, CH₃), 0.76 (s, 3 H, CH₃) ppm. ¹³C-NMR (300 MHz, CDCl₃) δ = (140.0, 130.1, 127.7, 127.5, 125.9, 123.7, 77.0, 32.1, 22.1, 21.1) ppm
Schmelzpunkt (°C): 205

### Ausführungsbeispiel 7

### Synthese von BDBDA-DOP:

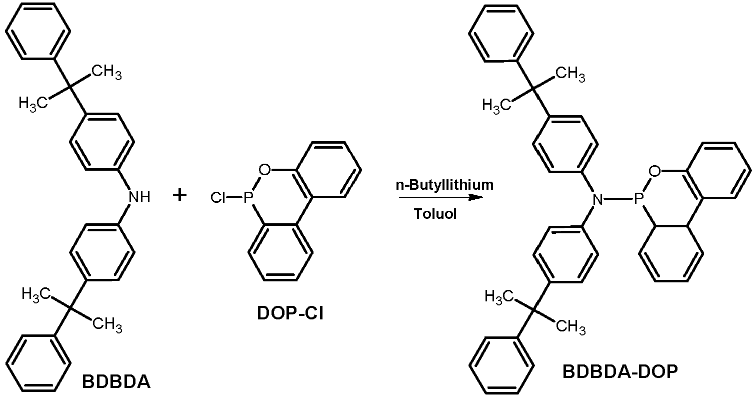

Die verwendete Apparatur wurde sorgfältig getrocknet. Die Synthese wurde unter Stickstoff-atmosphäre durchgeführt.

In einen 250ml-Dreihalskolben, der mit Magnetrührer, Tropftrichter und Argonzuleitung ausgestattet war, wurden 4,5 g (0,011 mol) 4,4'-Bis(α,α-dimethylbenzyl)diphenylamin (BDBDA) gegeben. Dann wurde ca. 30 min bei ca. 0,02 mbar im Ölbad (85°C) erwärmt. Nach dem Abkühlen auf Raumtemperatur und Füllen des Kolbens mit Stickstoff wurden 50 ml trockenes Toluol mittels Spritze zugegeben. Anschließend wurden 6,9 ml einer 15%igen Lösung von n-Buthyllithium in n-Hexan (0.011 mol) mittels einer Spritze im Verlauf von 10 min zugegeben. Die Reaktionsmischung wurde auf ca. 40°C erwärmt und danach mit einem Eisbad gekühlt. Anschließend wurde eine Lösung von 2,6 g (0,011 mol) DOP-CI in abs. Toluol (30 ml) innerhalb von 10 Min hinzugetropft. Danach wurde die Reaktionsmischung 1 h bei Raumtemperatur gerührt. Anschließend wurde das Lithiumchlorid unter Inertbedingungen abfiltriert. Die so erhaltene Lösung von BDBDA-DOP wurde für Ausführungsbeispiel 9 verwendet.

³¹P-NMR (300 MHz, CDCl₃) δ = 79,9 ppm.

### Ausführungsbeispiel 8

### Synthese von BDBDA-DOPS:

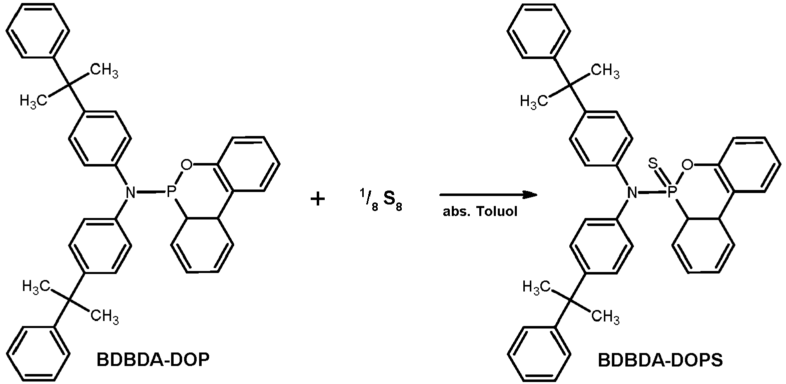

Zu der in Ausführungsbeispiel 7 erhaltenen Lösung von BDBDA-DOP in Toluol wurde elementarer Schwefel (0.45 g, 0.014 mol) hinzugefügt. Dann wurde 3 h bei 80 °C gerührt. Danach wurde das Lösemittel im Vakuum entfernt. Der so erhaltene Rückstand wurde zweimal aus Acetonitril umkristallisiert.

Die Ausbeute an spektroskopisch reinem BDBDA-DOPS betrug 73 %.

³¹P-NMR (300 MHz, CDCl₃) δ = 66,0 ppm.

### Ausführungsbeispiel 9

### Synthese von BDBDA-DPhP:

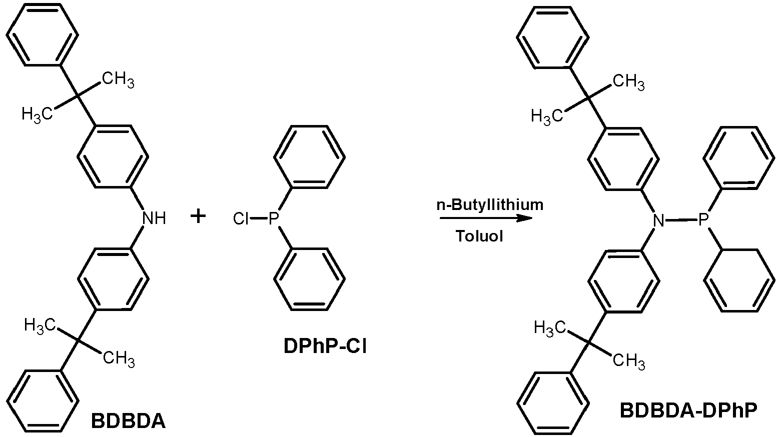

Die verwendete Apparatur wurde sorgfältig getrocknet. Die Synthese wurde unter Stickstoffatmosphäre durchgeführt.

In einen 250ml-Dreihalskolben, der mit Magnetrührer, Tropftrichter und Argonzuleitung ausgestattet war, wurden 6,1 g (0,015 mol) 4,4'-Bis(α,α-dimethylbenzyl)diphenylamin (BDBDA) gegeben. Dann wurde ca. 30 min bei ca. 0,02 mbar im Ölbad (85°C) erwärmt. Nach dem Abkühlen auf Raumtemperatur und Füllen des Kolbens mit Stickstoff wurden 50 ml trockenes Toluol mittels Spritze zugegeben. Anschließend wurden 9,4 ml einer 15%igen Lösung von n-Buthyllithium in n-Hexan (0.015 mol) mittels einer Spritze im Verlauf von 10 min zugegeben. Die Reaktionsmischung wurde 30 min gerührt. Dann wurde eine Lösung von 3,3 g (0,015 mol) DPhP-Cl in abs. Toluol (30 ml) innerhalb von 10 min hinzugetropft. Danach wurde die Reaktionsmischung 3 h bei Raumtemperatur gerührt. Anschließend wurde das Lithiumchlorid unter Inertbedingungen abfiltriert. Die so erhaltene Lösung von BDBDA-DPhP wurde für Ausführungsbeispiel 10 verwendet.

³¹P-NMR (300 MHz, CDCl₃) δ = 54,9 ppm.

### Ausführungsbeispiel 10

### Synthese von BDBDA-DPhPS:

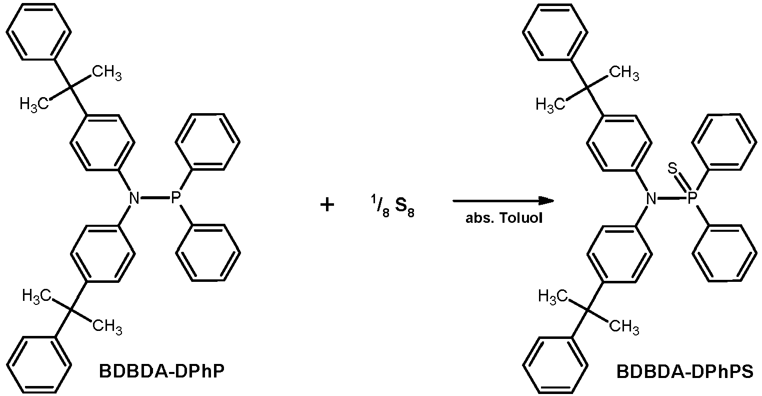

Zu der in Ausführungsbeispiel 9 erhaltenen Lösung von BDBDA-DPhP in Toluol wurde elementarer Schwefel (0.58 g, 0.018 mol) hinzugefügt. Dann wurde 3 h bei 60 °C gerührt. Danach wurde das Lösemittel im Vakuum entfernt. Der so erhaltene Rückstand wurde zweimal aus Acetonitril umkristallisiert. Die Ausbeute an spektroskopisch reinem BDBDA-DPhPS betrug 78 % (bezogen auf DPhP-Cl).

³¹P-NMR (300 MHz, CDCl₃) δ = 62,3 ppm.

### Ausführungsbeispiel 11

### Synthese von BDBDA-DDP:

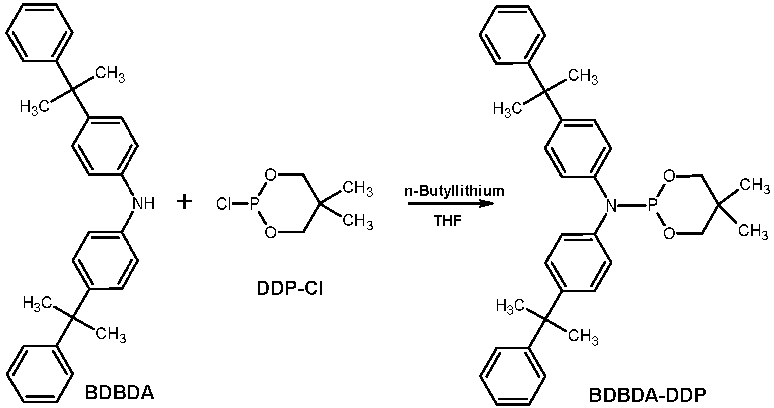

In einen sorgfältig getrockneten und mit Argon gefüllten Zweiliter-Dreihalskolben, der mit Magnetrührer, Tropftrichter und Argonzuleitung ausgestattet war, wurden 206,8 g 4,4'-Bis(α,α-dimethylbenzyl)diphenylamin (BDBDA) gegeben. Dann wurde ca. 30 min bei ca. 0,02 mbar im Ölbad (85°C) erwärmt. Nach dem Abkühlen auf Raumtemperatur und Füllen des Kolbens mit Stickstoff wurden 500 ml trockenes THF mittels Spritze zugegeben. Es entstand eine farblose Lösung. Zu dieser wurden im Verlauf von ca. 60 min ca. 323 ml einer 1,6-molaren Lösung von n-Butyllithium in n-Hexan unter Rühren zugetropft (mittels Spritze). Dabei wurde der Kolben mit einem Wasserbad gekühlt. Es entstand eine gelbe Lösung, welche 30 min gerührt wurde.

Dann wurden mittels Spritze ca. 84,3 g DDP-CI im Verlauf von ca. 90 min unter Rühren zugetropft (Kolben weiterhin im Wasserbad). Im Verlauf der Reagenzzugabe wurde die Gelbfärbung blasser und nachdem ca. zwei Drittel des DDP-Cl zugegeben worden waren, wurde die Reaktionsmischung trüb. Dann wurden 100 ml trockenes n-Hexan unter Rühren zugegeben um die Ausfällung von noch gelöstem LiCI zu bewirken. Es wurde einige Minuten gerührt. Der Kolben mit der Produktlösung wurde über Nacht bei Raumtemperatur unter Stickstoff aufbewahrt. Das ausgeschiedene LiCl wurde mittels Dekantierens unter Inertbedingungen entfernt. Dann wurde der größte Teil der flüchtigen Bestandteile der Lösung in eine Kühlfalle destilliert, wobei der Druck langsam bis auf ca. 50 mbar gesenkt wurde und die Temperatur des Ölbades auf 60°C erhöht wurde. Es wurde ein zäh-öliger Rückstand erhalten, der weiter bis auf ca. 70°C erwärmt wurde. Zu diesem wurden ca. 800 ml Acetonitril durch einen Trichter hinzugegeben.

Dann wurde der Kolbeninhalt unter Stickstoffatmosphäre bis kurz unter den Siedepunkt erwärmt. Es verblieb eine Trübung, die sich nach dem Stoppen des Rührers absetzte. Nach dem Abkühlen des Kolbeninhalts wurde unter Inertbedingungen in einen mit Stickstoff gefüllten 2L-Kolben dekantiert. Der verbliebene Rückstand wurde mit ca. 100 ml Acetonitril versetzt, es wurde erwärmt und durch ein Papierfilter filtriert (in den 2Liter-Kolben mit der dekantierten Lösung). Aus der vereinigten Produktlösung schied sich beim Abkühlen kristallines Produkt an der Kolbenwand ab. Nach ca. 2 h, als schon erhebliche Mengen des Produkts auskristallisiert waren, wurde der Kolben in den Kühlschrank überführt und dort über Nacht gelagert. Dann wurde die überstehende Lösung mittels Dekantierens abgetrennt. Das so erhaltene Rohprodukt wurde aus 750 ml Acetonitril unter Stickstoffatmosphäre umkristallisiert. Das Produkt wurde mittels Porzellantrichter/Filterpapier abgesaugt (Luftgegenwart) und anschließend im 1Literkolben mittels Vakuum einer Membranpumpe getrocknet, wobei vorsichtig mit dem Fön erhitzt und häufig umgeschwenkt wurde. Es wurde ein weißes Pulver erhalten (201 g). Aus der Restlösung der Umkristallisation wurden weitere 10 g des Produkts isoliert. Die NMR-spektroskopische Untersuchung des Produktes zeigte eine Reinheit von ≥ 99,5%.

³¹P-NMR (300 MHz, CDCl₃) δ = 121,0 ppm; ¹H-NMR (300 MHz, CDCl₃) δ = 7,10-7,33 (m, 18 H, Ar), 3.53 - 3.56 (d, 4 H, CH₂), 1.72 (s, 12 H, H₃C-C-CH₃), 1,04 (s, 3 H, CH₃), 0,61 (s, 3 H, CH₃) ppm. ¹³C-NMR (300 MHz, CDCl3, Chrom-Acetylacetonat) δ = 140.0 (s, 2C), 146,2 (s, 2C), 142,7 (d, 2C), 128,0 (s, 4C), 127,4 (s, 4C), 126,8 (s, 4C), 125,6 (s, 2C), 124,8 (d, 4C), 72,0 (s, 2C), 42,6 (s, 2C), 32,3 (d, 1C), 30,8 (s, 4C), 22,4 (d, 2C) ppm.
Schmelzpunkt (°C): 98-99°C

### Ausführungsbeispiel 12

### Synthese von BDBDA-DDPS:

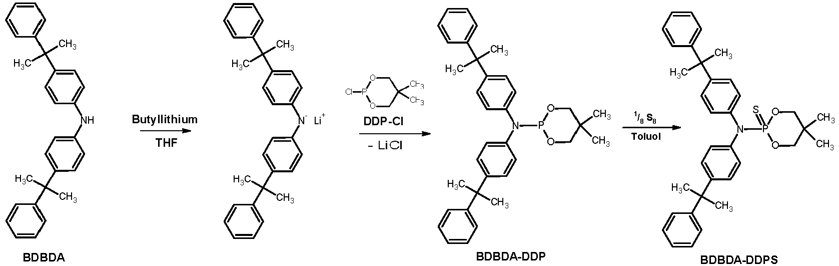

Die verwendete Apparatur wurde sorgfältig getrocknet.

BDBDA (239,7 g) wurde vorgelegt, dann wurde die Apparatur 3 x evakuiert und wieder mit Stickstoff gefüllt um eventuell anhaftende Feuchtigkeit zu entfernen. Anschließend wurden 440 ml trockenes THF mittels Spritze zugegeben. Es entstand eine farblose Lösung. Zu der im Verlauf von ca. 70 min 375 ml einer 1,6-molaren Butyllithium-Lösung in n-Hexan unter Rühren zugetropft wurden (mittels Spritze). Dabei wurde der Kolben mit einem Wasserbad gekühlt. Es entstand eine gelbe Lösung, die noch 30 min gerührt wurde. Dann wurden mittels Spritze 97,8 g DDP-CI im Verlauf von ca. 80 min unter Rühren zugetropft (Kolben weiterhin im Wasserbad), wobei eine blassgelbe Suspension erhalten wurde. Es wurde ein ³¹P-NMR-Spektrum dieser Suspension aufgenommen (CDCl₃), dass eine vollständige Umsetzung des DDP-CI zeigte.

Der Reaktionsansatz wurde über Nacht bei Raumtemperatur unter Stickstoff gelagert.

Das ausgeschiedene LiCI wurde durch Dekantieren unter Inertbedingungen abgetrennt. Dabei wurde die Lösung in einen 2L-Kolben überführt. Zum Salzrückstand wurden 20 ml THF und 50 ml Cyclohexan gegeben (um noch enthaltenes Produkt größtenteils herauszulösen). Dann wurde gerührt und die Suspension durch ein Papierfilter filtriert (in den 2L-Kolben mit der BDBDA-DDP-Lösung). Die vereinigte Lösung war hellbraun und wurde anschließend der Schwefelungsreaktion unterzogen.

Der 2Liter-Kolben wurde mit einem Innenthermometer ausgerüstet. Dann wurden ca. 20 g Schwefel im Verlauf von ca. 15 min in vier Portionen unter Rühren zugesetzt, wobei der Kolben in ein Ölbad eintauchte. Es war ein deutlicher Temperaturanstieg bis ca. 45°C festzustellen. Als die Temperatur ihr Maximum überschritten hatte, wurde mit dem Aufheizen des Ölbads begonnen, das im Verlauf von 30 min auf 57°C erwärmt wurde. Es wurde noch 30 min bei ca. 50-52°C (Innentemperatur) gerührt, und dann wurde eine NMR-Probe entnommen. Das ³¹P-NMR-Spektrum der Produktlösung zeigte, dass die Schwefelung mit sehr hoher Selektivität erfolgt war.

Die so erhaltene Lösung wurde in einen 2Liter-Einhalskolben überführt. Es wurde mit 40 ml warmen THF nachgespült, da bereits eine geringe Menge Produkt am Boden des Dreihalskolbens auskristallisiert war. Im Einhalskolben schied sich weiteres Produkt am Boden aus. Um eine ausreichend vollständige Kristallisation des Produkts zu erreichen, wurde am Rotationsverdampfer ungefähr die Hälfte der Lösungsmittel THF und n-Hexan destilliert (Wasserbad: 40°C). Dabei wurde der Druck in kleinen Schritten gesenkt. Während der Destillation kristallisierte ein bedeutender Teil des Produkts aus. Der verschlossene Kolben wurde über Nacht im Kühlschrank (ca. 5°C) gelagert.

Das auskristallisierte Produkt wurde abgesaugt. Es wurde ein beige-farbiger kristalliner Feststoff erhalten, dessen ³¹P-NMR- und Protonenspektrum bereits eine gute Reinheit zeigen (ca. 99 mol% Reinheit im Phosphorspektrum; auch das Protonenspektrum zeigt kaum Verunreinigungen). Erhalten wurden ca. 230 g der Substanz. Die Restlösung wurde mit Wasser gewaschen um das restliche LiCI zu entfernen (die wässrige Phase war braun und wurde verworfen). Dann wurde sie am Rotationsverdampfer im Teilvakuum stark eingeengt, wobei eine weitere Produktfraktion erhalten wurde. Die weitere Reinigung erfolgte durch Umkristallisation aus Acetonitril und Trocknen im Vakuum unter vorsichtigem Erwärmen. Insgesamt wurden 256 g reines BDBDA-DDPS als weißer Feststoff erhalten (77% der theoretischen Menge).

³¹P-NMR (300 MHz, CDCl₃) δ = 64,1 ppm; ¹H-NMR (300 MHz, CDCl₃) δ = 7,15-7,35 (m, 18 H, Ar), 4,28-4,36 (q, 2H, CH₂), 3,69-3,82 (q, 2H, CH₂), 1,68 (s, 12 H, H₃C-C-CH₃), 0,87 (s, 3 H, CH₃) , 0,67 (s, 3 H, CH₃) ppm.
Schmelzpunkt (°C): 133-135

### Ausführungsbeispiel 13

### Synthese von BDBDA-DDP aus PCl₃, BDBDA und 1,3-Dimethylpropan-1,3-diol:

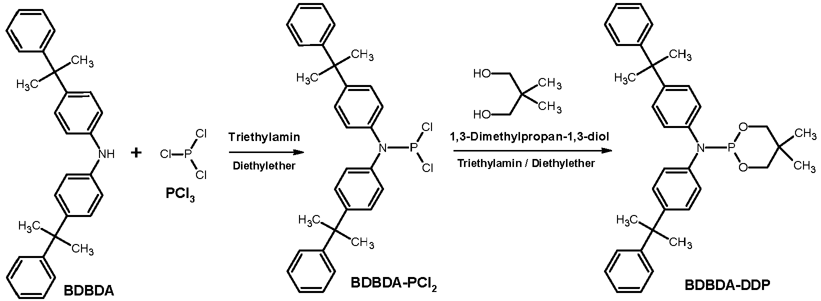

Die verwendete Apparatur wurde sorgfältig getrocknet. Die Synthese wurde unter Stickstoffatmosphäre durchgeführt.

BDBDA (11,4 g) wurde vorgelegt, dann wurde die Apparatur dreimal evakuiert und wieder mit Stickstoff gefüllt um eventuell am BDBDA-Pulver anhaftende Feuchtigkeit zu entfernen. Anschließend wurden 100 ml absoluter Diethylether mittels Spritze zugegeben. Die so erhaltene Lösung wurde auf etwa 10°C gekühlt. Dann wurden 2,8 g Triethylamin sowie 3,84 g Phosphortrichlorid nacheinander unter Rühren zugegeben, wobei ein farbloser Feststoff ausfiel (Triethylammoniumchlorid). Es wurde noch drei Stunden bei Raumtemperatur gerührt. Dann wurde das Triethylammoniumchlorid unter Inertbedingungen abfiltriert. Anschließend wurde die Lösung im Teilvakuum eingeengt. Es wurde ein ³¹P-NMR-Spektrum aufgenommen, welches nur das Phosphorsignal von BDBDA-PCl₂ beinhaltete (300 MHz, CDCl₃; 6 = 148,8 ppm).

Dann wurden 6 g Triethylamin sowie 6 g 1,3-Dimethylpropan-1,3-diol hinzugefügt. Nachdem die Reaktionsmischung zwei Stunden bei Raumtemperatur gerührt worden war, wurden 50 ml Diethylether zugegeben. Danach wurde das ausgeschiedene Triethylammoniumchlorid abfiltriert und das Lösungsmittel abdestilliert. Der verbliebene Rückstand wurde aus Acetonitril umkristallisiert. Die Ausbeute an spektroskopisch reinem BDBDA-DDP betrug 10,9 g (72 % der theoretischen Menge, bezogen auf BDBDA).

³¹P-NMR (300 MHz, CDCl₃) δ = 121,0 ppm; ¹H-NMR (300 MHz, CDCl₃) δ = 7,10-7,33 (m, 18 H, Ar), 3.53 - 3.56 (d, 4 H, CH₂), 1.72 (s, 12 H, H₃C-C-CH₃), 1,04 (s, 3 H, CH₃) , 0,61 (s, 3 H, CH₃) ppm.

### Ausführungsbeispiel 14

### Synthese von PhP(BDBDA)2

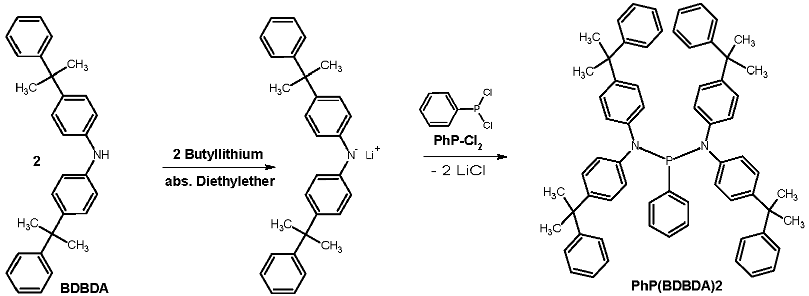

Die verwendete Apparatur wurde sorgfältig getrocknet. Die Synthese wurde unter Stickstoffatmosphäre durchgeführt.

BDBDA (116,4 g) wurde vorgelegt, dann wurde die Apparatur dreimal evakuiert und wieder mit Stickstoff gefüllt um eventuell anhaftende Feuchtigkeit zu entfernen. Anschließend wurden 750 ml trockener Diethylether mittels Spritze zugegeben. Es entstand eine farblose Lösung. Zu dieser wurden im Verlauf einer Stunde 171,3 ml einer 1,6 molaren Butyllithium-Lösung in n-Hexan unter Rühren und Kühlen mit einem Eis-Wasser-Bad mittels Spritze zugetropft. Es entstand eine blassgelbe Lösung des Lithiumsalzes von BDBDA. Es wurde noch 45 min gerührt, und dann wurden mittels Spritze 24,52 g PhP-Cl₂ im Verlauf von 20 min unter Rühren zu der weiterhin gekühlten Lösung getropft. Zunächst entstand eine Trübung wegen der Ausscheidung von LiCl. Zum Ende der Reagenzzugabe schied sich sehr viel Produkt aus. Das Rühren wurde noch eine Stunde mit moderater Rührgeschwindigkeit fortgesetzt. Es wurde ein ³¹P-NMR-Spektrum dieser Suspension aufgenommen (CDCl₃), dass eine vollständige Umsetzung des PhP-Cl₂ und sehr selektive Produktbildung zeigte.

Dann wurde der Hauptteil der flüchtigen Bestandteile unter schwachem Vakuum in eine mit flüssigem Stickstoff gekühlte Vorlage destilliert (der Kolben tauchte in ein Wasserbad von ca. 20°C). Zum Ende der Destillation konnte nicht mehr gerührt werden. Schließlich wurde kurzzeitig stärkeres Vakuum angelegt. Zum erhaltenen Rückstand wurden 500 ml absolutes Toluol hinzugegeben (Spitze). Dann wurde unter vorsichtigem Rühren bis auf ca. 65°C erwärmt, wobei sich das Produkt auflöste und nur das LiCI nicht gelöst verblieb, welches unter inerten Bedingungen abfiltriert wurde. Nun wurde das Toluol unter Teilvakuum in eine mit flüssigem Stickstoff gekühlte Vorlage destilliert (der Kolben tauchte in ein Ölbad von zunächst ca. 55°C, zum Ende der Destillation wurde die Ölbadtemperatur bis auf ca. 75°C erhöht). Als das Toluol fast vollständig destilliert worden war, erstarrte der Rückstand. Der so erhaltene Feststoff wurde eine Stunde mit 1 Liter Acetonitril unter Rückfluss und Stickstoffatmosphäre gerührt. Das Produkt wurde mittels Porzellantrichter/Filterpapier abgesaugt (in Luftgegenwart). Es wurde ein weißer kristalliner Filterkuchen erhalten, der im Vakuum unter mäßigem Erwärmen getrocknet wurde. Die Ausbeute an PhP(BDBDA)2 betrug 112 g (ca. 89% der theoretisch möglichen Menge).

³¹P-NMR (300 MHz, CDCl₃) δ = 86,0 ppm; ¹H-NMR (300 MHz, CDCl₃) δ = 7,10-7,33 (m, 25 H, Ar), 6,97-7,05 (d, 8H, Ar), 6,78-6,84 (d, 8H, Ar), 1,66 (s; 24 H, H₃C-C-CH₃) ppm.
Schmelzpunkt (°C): 116-118

### Untersuchungen zur Stabilisator-Wirkung in Polypropylen:

Die Versuche zur Stabilisator-Wirkung mit Polypropylen wurden bei 230 °C in einem Doppelschnecken-Mikroextruder durchgeführt. Es wurde Polypropylen vom Typ MOPLEN HP556E sowie MOPLEN HP500N (Produkte der Lyondell Basell Industries) verwendet, die zuvor mittels einer Zentrifugalmühle bei 10.000 U/min zerkleinert und ca. 5 h bei 100 °C im Vakuumtrockenschrank (20 mbar) getrocknet worden waren. Für jedes Polymer-Additiv-Gemisch wurden jeweils drei Extrusionsversuche durchgeführt. Die Gesamtmenge des bei jedem Einzelversuch verwendeten Polymer-Additiv-Gemisches betrug 4 g. Bei jedem Durchlauf wurden die Kräfte mittels einer Software in Sekundenabständen aufgezeichnet.

In der Tabellen 1 und 2 sind die verwendeten Additive, ihre Konzentrationen sowie die bei verschiedenen Extrusionszeiten wirkenden Kräfte aufgezeichnet (jeweils als Durchschnittswerte von drei Einzelversuchen). Zum Vergleich wurden auch Extrusionen mit dem etablierten Stabilisatorsystem ADK-STAB A611 / Caesit AV durchgeführt sowie reines MOPLEN HP556E bzw. MOPLEN HP5 getestet.

**Tabelle 1 (Versuche mit MOPLEN HP 556E)**

| **Additiv** | **Kraft nach 30 s** | **Kraft nach 60 s** | **Kraft nach 120 s** | **Kraft nach 180 s** | **Kraft nach 300 s** | **Kraft nach 600s** |
|---|---|---|---|---|---|---|
| | **(N)** | **(N)** | **(N)** | **(N)** | **(N)** | **(N)** |
| - | 1830 | 1760 | 1660 | 1590 | 1430 | 1260 |
| ADK-STAB A611 | 1800 | 1820 | 1720 | 1660 | 1540 | 1270 |
| 0,2% | | | | | | |
| Caesit AV^{e)} 0,1 % | | | | | | |
| Phenothiazin-DOP | **2040** | **2030** | **1940** | **1960** | **1990** | **1930** |
| 0,2% | | | | | | |
| Phenothiazin-DOP | 1980 | 1990 | 2000 | 1990 | 2010 | 1970 |
| 0,5% | | | | | | |
| Phenothiazin-DOP | 2000 | 2010 | 1970 | 1980 | 1990 | 2050 |
| 1,0% | | | | | | |
| Phenothiazin-DOPS | **2000** | **2040** | **1990** | **2060** | **2020** | **2010** |
| 0,5% | | | | | | |
| Phenothiazin-DOPS | 2020 | 2000 | 1970 | 1920 | 1930 | 2010 |
| 1,0% | | | | | | |

**Tabelle 2 (Versuche mit MOPLEN HP 500N)**

| **Additiv** | **Kraft nach 30 s** | **Kraft nach 60 s** | **Kraft nach 120 s** | **Kraft nach 180 s** | **Kraft nach 300 s** | **Kraft nach 600s** |
|---|---|---|---|---|---|---|
| | **(N)** | **(N)** | **(N)** | **(N)** | **(N)** | **(N)** |
| - | 550 | 530 | 510 | 480 | 460 | 450 |
| Ceasit 0,2 % | 640 | 600 | 580 | 560 | 540 | 520 |
| ADK-STAB A611 0,2% | 610 | 570 | 560 | 540 | 520 | 530 |
| PhP(BDBDA)2 0,2% | **730** | **730** | **750** | **740** | **740** | **730** |
| Ceasit AV 0,2% | | | | | | |
| BDBDA-DDP 0,2% | 600 | 600 | 610 | 600 | 590 | 580 |

### Mehrfachextrusionen

Für die Extrusionen wurde Polypropylen des Typs Moplen HP556E LOI 033L30 der Firma *LyondellBasell* verwendet. Die Versuche wurden an einem Doppelschneckenextruder *Thermo Scientific Process 11* mit einem Schneckendurchmesser von 11 mm durchgeführt.

In einem Doppelschneckenextruder wurden jeweils insgesamt 350 g reines Polypropylen, Polypropylen, sowie Polypropylen mit einem Zusatz von 0.3% Phenothiazin_DOPS (PTZ_DOPS) je dreimal extrudiert. Nach jeder Extrusion wurde die Probe für ca. 1 h im Vakuumtrockenschrank bei 60 °C getrocknet. Anschließend wurden 50 g zurück behalten und das restliche Granulat erneut extrudiert. Das verwendete Temperaturprofil ist Tabelle 3, die bei jeder Extrusion erhaltenen Parameter sind Tabelle 4 bis Tabelle 6 zu entnehmen.

**Tabelle 3: Verwendetes Temperaturprofil bei den Extrusionen am Doppelschneckenextruder.**

| **Düse** | **Zone 7** | **Zone 6** | **Zone 5** | **Zone 4** | **Zone 3** | **Zone2** |
|---|---|---|---|---|---|---|
| 210 | 230 | 230 | 230 | 230 | 220 | 210 |

**Tabelle 4: Parameter der drei Extrusionen von reinem Polypropylen.**

| | **1. Extrusion** | **2. Extrusion** | **3. Extrusion** |
|---|---|---|---|
| **Drehzahl /rpm** | 150 | 150 | 150 |
| **Durchsatz /g/h** | 456 | 516 | 552 |
| **Schmelztemperatur /°C** | 216-217 | 215-217 | 215-216 |
| **Schmelzdruck /bar** | 26-28 | 30-33 | 31-33 |
| **Drehmoment /%** | 27-29 | 35-39 | 36-41 |
| **Drehmoment /Nm** | 3.1-3.3 | 4.2-4.6 | 4.4-5.0 |
| **Drehmoment /kW** | 0.04-0.05 | 0.06-0.07 | 0.06-0.07 |

**Tabelle 5: Parameter der drei Extrusionen von Polypropylen mit einem Zusatz von 0.3% Phenothiazin_DOPS.**

| **Reines PP** | **1. Extrusion** | **2. Extrusion** | **3. Extrusion** |
|---|---|---|---|
| **Drehzahl /rpm** | 150 | 150 | 150 |
| **Durchsatz /g/h** | 468 | 576 | 552 |
| **Schmelztemperatur /°C** | 213-215 | 214-217 | 214-217 |
| **Schmelzdruck /bar** | 27-29 | 32-33 | 30-32 |
| **Drehmoment /%** | 28-30 | 37-40 | 33-37 |
| **Drehmoment /Nm** | 3.4-3.6 | 4.4-4.8 | 3.9-4.4 |
| **Drehmoment /kW** | 0.05 | 0.06-0.07 | 0.06-0.07 |

Anschließend wurden von allen erhaltenen Proben, welche zuvor über Nacht im Vakuumtrockenschrank bei ca. 60 °C getrocknet worden waren, Melt-Flow-Messungen durchgeführt. Zu diesem Zweck wurden jeweils 3.5 g der Probe bei 230 °C und einem Gewicht von 2.16 kg (DIN EN ISO 19069) vermessen. Die Messung jeder Probe erfolgte hierbei zwei bis drei Mal und die Ergebnisse wurden anschließend gemittelt. Der MVR des reinen Polymers soll hierbei nach den Angaben des Herstellers bei 1.10 cm³/10min liegen. Tabelle 5 zeigt die Ergebnisse dieser Messungen.

**Tabelle 6: Auflistung der gemittelten MVR-Werte der jeweils drei Extrusionen von reinem Polypropylen, sowie von Polypropylen mit einem Zusatz von 0.3% Phenothiazin_DOPS.**

| **Probe** | **MVR /ccm/10min** |
|---|---|
| reines PP (Granulat, nicht extrudiert) | 1,1294 |
| 1.Extrusion von reinem PP | 1,2120 |
| 2.Extrusion von reinem PP | 1,3073 |
| 3.Extrusion von reinem PP | 1,3714 |
| 1.Extrusion von PP mit 0.3% PTZ_DOPS | 1,1311 |
| 2.Extrusion von PP mit 0.3% PTZ_DOPS | 1,1179 |
| 3.Extrusion von PP mit 0.3% PTZ_DOPS | 1,1524 |

Der Vergleich der Ergebnisse von Tabelle 5 zeigt die sehr gute Stabilsierungswirkung der erfindungsgemäßen Stabilisatoren, da im Gegensatz zu reinem PP kein bzw. nur ein geringer Molekulargewichtsabbau (= höherer MVR) stattfindet.

### Stabilisator-Wirkung der erfindungsgemäßen Substanzen:

Die erfindungsgemäßen phosphorhaltigen Phenothiazin-Derivate wurden hinsichtlich ihrer Wirkung als Verarbeitungsstabilisatoren getestet. Es wurde untersucht, wie die neuen Additive die Schmelzviskosität von Polypropylen während des Extrusionsprozesses (230°C) beeinflussen. Bei den Versuchen wurde die Kraft im Extruder in Abhängigkeit von der Zeit gemessen. Die gemessene Kraft ist proportional zum wirkenden Drehmoment und letzteres ist direkt von der Schmelzviskosität abhängig. Eine Abnahme der gemessenen Kraft zeigt somit einen Polymerabbau während des Extrusionsprozesses an. Zum Vergleich wurde das etablierte Stabilisatorsystem ADK-STAB A611 (0.2 %) / Caesit AV (0.1 %) getestet. Vergleichsversuche mit reinem Polypropylen wurden ebenfalls durchgeführt.

Erwartungsgemäß wurde mit reinem Polypropylen eine kontinuierliche Kraftabnahme während des Extrusionsvorgangs festgestellt. Nach 10 min betrug die gemessene Kraft nur noch etwa zwei Drittel des nach 30 s gemessenen Wertes. Bei Verwendung der etablierten Stabilisatorenmischung blieb die Kraft, wie zu erwarten war, zunächst konstant, doch sank sie bereits nach 3 min Extrusionsdauer deutlich ab und fiel nach 10 min Verweilzeit wie bei reinem PP auf etwa zwei Drittel des Ausgangswertes. Dies bedeutet, dass das Vergleichssystem schon nach relativ kurzer Extrusionszeit seine Wirkung einbüßt.

Überraschenderweise wurde bei Polypropylen, dem geringe Mengen der erfindungsgemäßen Stabilisatoren zugesetzt worden war, keinerlei Veränderung der Kraft während der Extrusion festgestellt. Sogar nach langer Verweilzeit im Extruder (z. B. 10 min!) erfolgte keine Kraftabnahme, während das Vergleichssystem längst seine Wirkung verloren hatte (starker Abfall der gemessenen Kraft).

Somit zeigten die erfindungsgemäßen Stabilisatoren eine hervorragende und im Vergleich zum Vergleichssystem viel höhere Wirksamkeit.

Die Versuche ergaben, dass bei Verwendung der erfindungsgemäßen Stabilisatoren eine Verarbeitung des Polypropylens in der Schmelze (Extrusion, Spritzguss etc.) ohne Abbauprozesse möglich ist.

Das primäre bzw. sekundäre Antioxidant kann dabei auf die gleiche Art und Weise wie die Verbindung gemäß allgemeiner Formel I in das organische Material eingearbeitet werden.

Primäre Antioxidantien wirken über einen radikalischen Mechanismus mit kettenbrechender Wirkung. Sekundäre Antioxidantien haben eine stabilisierende Wirkung, welche auf einem ionischen Mechanismus beruht und wirken als Hydroperoxidzersetzer. Eine Kombination beider Gruppen kann genutzt werden um synergetische Effekte zu erzielen.

## Patentansprüche

1. Verwendung einer Verbindung oder Mischungen mehrerer Verbindungen gemäß allgemeiner Formel I
A-B_{y} Formel I
wobei
das Fragment A die folgende Bedeutung aufweist 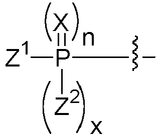
wobei jeweils unabhängig voneinander
X ein Schwefelatom ist,
n 0 oder 1 ist,
x 0 oder 1 ist,
Z¹ und Z² ausgewählt sind aus der Gruppe bestehend aus Wasserstoff, Alkylresten Arylresten, Alkylarylresten, Arylalkylresten, heterocyclischen Resten, wobei an die zuvor genannten Reste eine oder mehrere weitere Fragmente A und/oder B gebunden sein können,
sowie einer Gruppierung -O-Z³, wobei Z³ ausgewählt ist aus Alkylresten, Arylresten, Alkylarylresten, Arylalkylresten, sowie heterocyclischen Resten,
sowie einer Gruppierung -S-Z⁴, wobei Z⁴ ausgewählt ist aus Alkylresten, Arylresten, Alkylarylresten, Arylalkylresten, sowie heterocyclischen Resten,
wobei im Falle von x = 1 die Reste Z¹ und Z² gemeinsam mit dem Phosphoratom ein Ringsystem bilden können, an das ein oder mehrere weitere Fragmente A und/oder B gebunden sein können,
das Fragment B die folgende Bedeutung aufweist 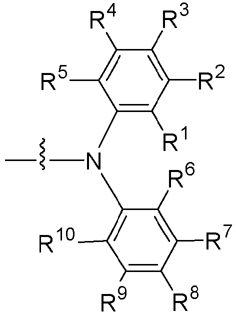
wobei jeweils unabhängig voneinander
R¹ bis R¹⁰ ausgewählt sind aus der Gruppe bestehend aus Wasserstoff, Alkylresten, Arylresten, Alkylarylresten, Arylalkylresten sowie heterocyclischen Resten, wobei die Reste R¹ und R⁶ auch über eine die Phenylgruppen verbindende Gruppierung -Y-verbunden sein können, wobei Y ausgewählt ist aus der Gruppe bestehend aus S, O, NH, PH sowie einer kovalenten Bindung,
wobei die Fragmente A und B durch kovalente Bindung des Phosphor- und des Stickstoffatoms miteinander verbunden sind,
und wobei
y 1 oder 2 ist,
wobei gilt x + y =2,
zur Stabilisierung von organischen Materialien, insbesondere gegen oxidativen, thermischen und/oder actinischen Abbau,
**dadurch gekennzeichnet, dass** das Fragment A ausgewählt ist aus den nachfolgenden Resten 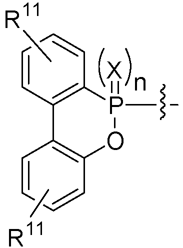 wobei gilt x = y = 1 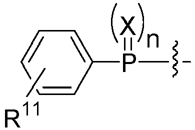 wobei gilt x = 0 und y = 2, oder 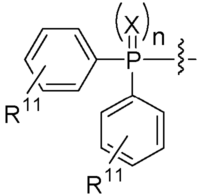 wobei gilt x = y = 1 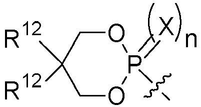 wobei gilt x = y = 1
wobei jeweils unabhängig voneinander
R¹¹ ausgewählt ist aus der Gruppe bestehend aus Wasserstoff, Alkylresten, Arylresten, Alkylarylresten, Arylalkylresten sowie heterocyclischen Resten,
R¹² ausgewählt ist aus der Gruppe bestehend aus Wasserstoff, Alkylresten, Arylresten, Alkylarylresten, Arylalkylresten, heterocyclischen Resten, wobei die zuvor genannten Reste auch Heteroatome aufweisen können und/oder an die zuvor genannten Reste ein oder mehrere weitere Fragmente A und/oder B gebunden sein kann, und
X und n wie in voranstehend definiert sind.

2. Verwendung nach Anspruch 1 zur Stabilisierung von Kunststoffen, Beschichtungen, Schmiermitteln, Hydraulikölen, Motorenölen, Turbinenölen, Getriebeölen, Metallbearbeitungsflüssigkeiten, Chemikalien oder Monomeren.

3. Verwendung nach einem der vorhergehenden Ansprüche, **dadurch gekennzeichnet, dass** das Fragment A ausgewählt ist aus den nachfolgenden Resten 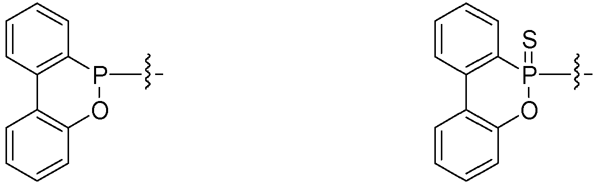
wobei jeweils gilt x = y = 1, 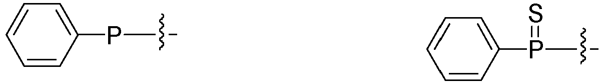
wobei jeweils gilt x = 0 und y = 2, sowie 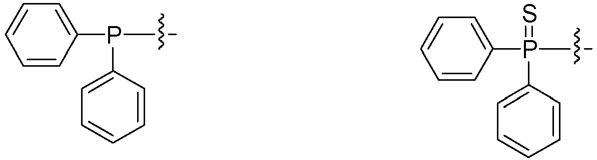
wobei jeweils gilt x = y = 1.

4. Verwendung nach einem der vorhergehenden Ansprüche, **dadurch gekennzeichnet, dass** die Verbindung gemäß allgemeiner Formel I wie nachfolgend definiert ist 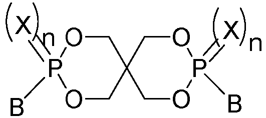 wobei X, n und B wie in Anspruch 1 definiert sind.

5. Verwendung nach einem der vorhergehenden Ansprüche, **dadurch gekennzeichnet, dass** das Fragment B ausgewählt ist aus der Gruppe bestehend aus den nachfolgenden Resten 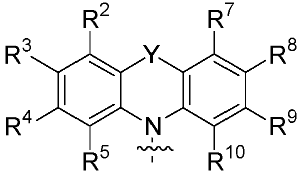 wobei gilt y = 1 oder 2, 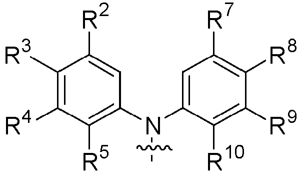 wobei gilt y = 1 oder 2, sowie 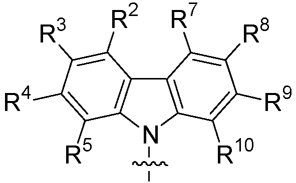 wobei gilt y =1 oder 2 wobei jeweils unabhängig voneinander R² bis R⁵ und R⁷ bis R¹⁰ und Y wie ins Anspruch 1 definiert sind.

6. Verwendung nach einem der vorhergehenden Ansprüche, **dadurch gekennzeichnet, dass** das Fragment B ausgewählt ist aus der Gruppe bestehend aus den nachfolgenden Resten

7. Verwendung nach einem der vorhergehenden Ansprüche, **dadurch gekennzeichnet, dass** die Verbindung gemäß allgemeiner Formel I ausgewählt ist aus der Gruppe bestehend aus den nachfolgenden Verbindungen 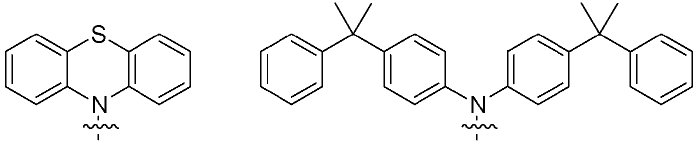 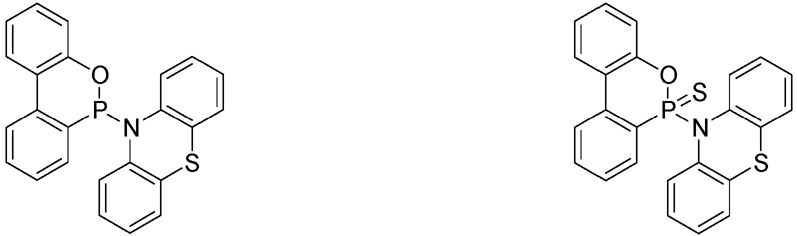 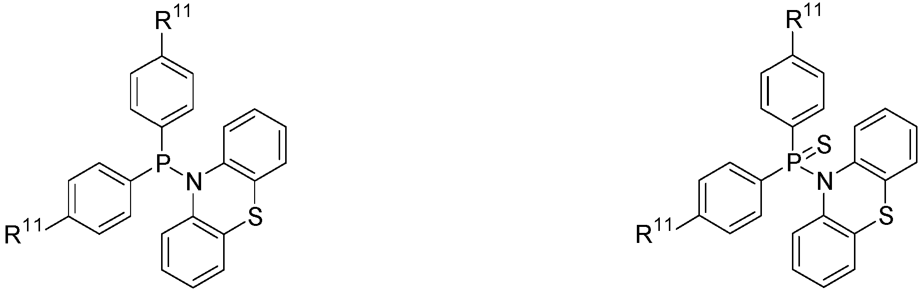 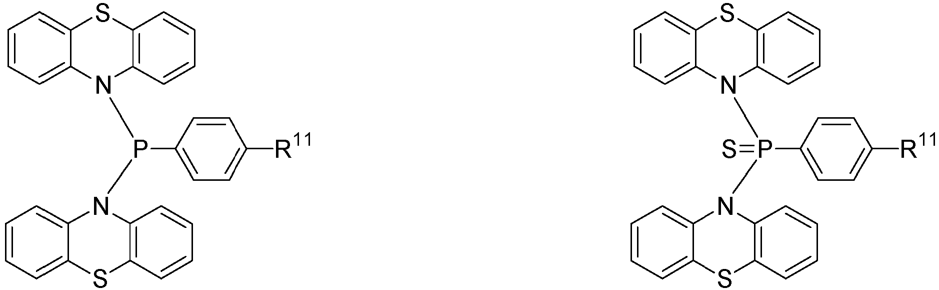 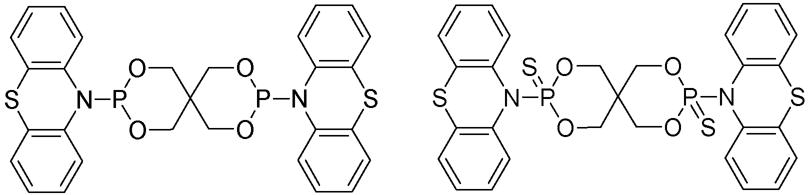 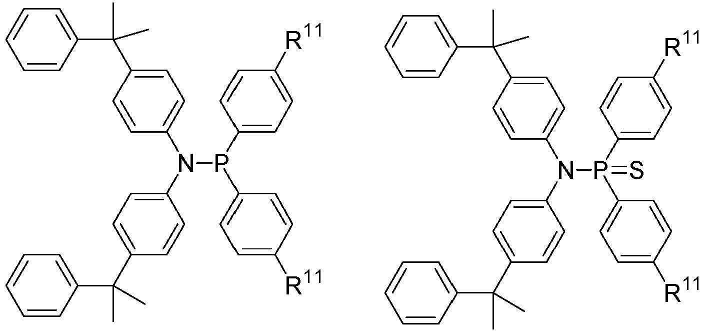 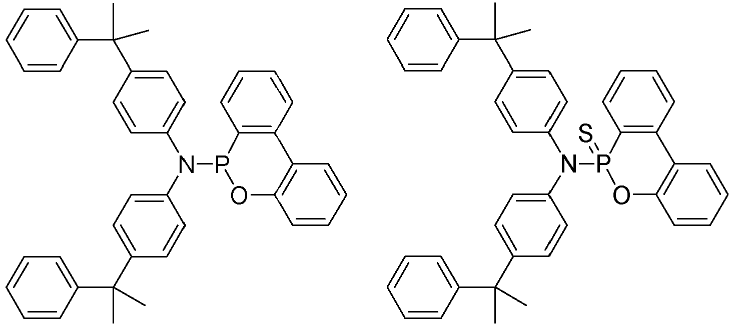 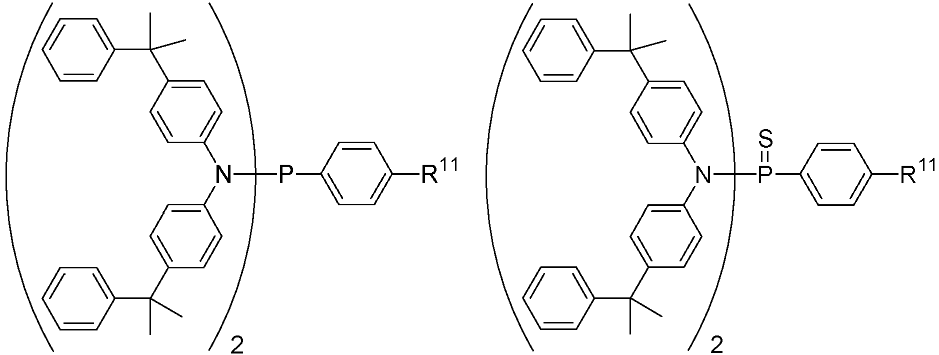 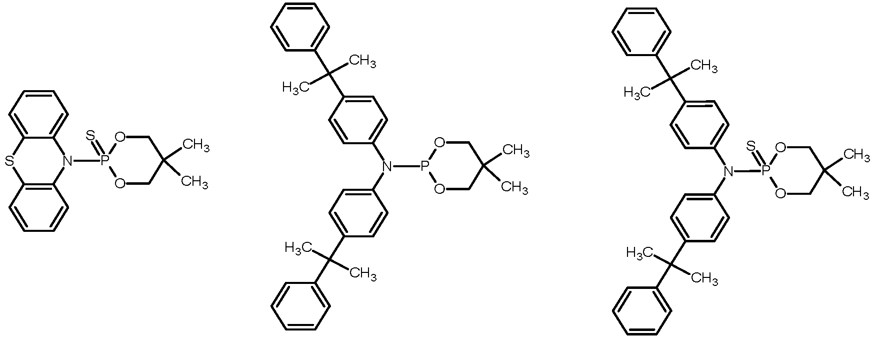 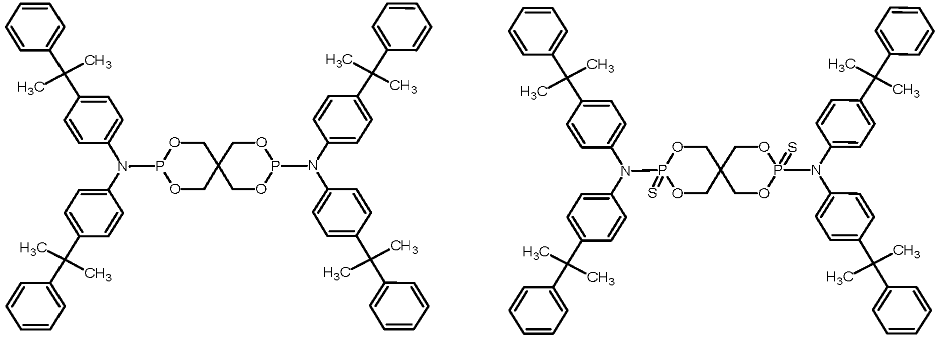 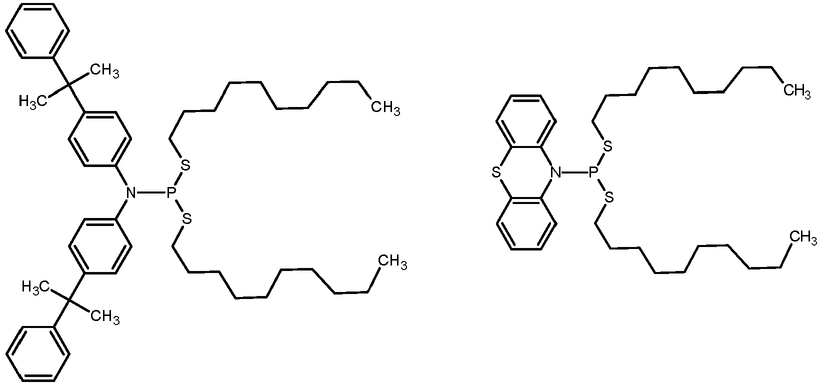 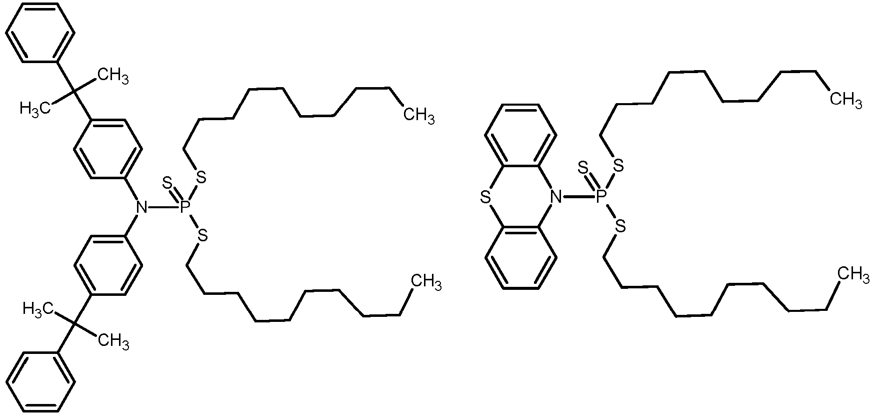 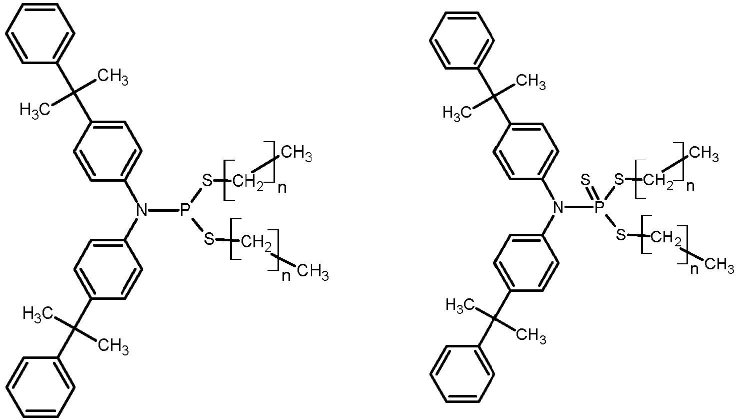 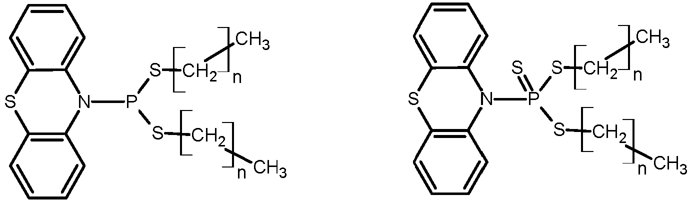
wobei jeweils unabhängig voneinander
R¹¹ ausgewählt ist aus der Gruppe bestehend aus Wasserstoff, Alkylresten, Arylresten, Alkylarylresten, Arylalkylresten sowie heterocyclischen Resten.

8. Verwendung nach einem der vorhergehenden Ansprüche, **dadurch gekennzeichnet, dass** die Verbindung gemäß allgemeiner Formel I oder im Falle einer Mischung mehrerer Verbindungen gemäß allgemeiner Formel I die Gesamtheit aller Verbindungen gemäß allgemeiner Formel I zu einem Gewichtsanteil von 0,01 bis 10 Gew.-%, bevorzugt von 0,05 bis 5 Gew.-%, besonders bevorzugt von 0,1 bis 1,5 Gew.-% im organischen Material enthalten ist.

9. Verwendung nach einem der vorhergehenden Ansprüche, zur Stabilisierung von Kunststoffen, wobei der Kunststoff ausgewählt ist aus der Gruppe bestehend aus
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (Ionomere), sowie Terpolymere wie z.B. Ethylen-Acrylsäure-Glycidyl(meth)acrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid sowie Blends hiervon,
b) Polystyrol, Polymethylstyrol, Poly-alpha-methylstyrol, Polyvinylnaphthalin, Polyvinylbiphenyl, Polyvinyltoluol, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS), sowie hydrierte Polystyrol-Derivate,
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid, Epichlorhydrin-Homo, und Copolymere hiervon,
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat,
e) Polymeren aus ungesättigten Alkoholen und Derivaten, wie z.B. Polyvinylalkohol, Polyvinylacetat, Polyvinylbutyral, Polyallylphthalat, Polyallylmelamin,
f) Polyacetalen, wie z.B. Polyoxymethylen POM) oder Copolymere mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i) Polyurethanen, aus hydroxyterminierten Polyethern oder Polyestern und aromatischen oder aliphatischen Isocyanaten insbesondere lineare Polyurethane (TPU), Polyharnstoffen,
j) Polyamiden wie z.B. Polyamid-6, 6.6, 6.10, 4.6, 4.10, 6.12, 10.10, 10.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP
k) Polyimiden, Polyamid-imiden, Polyetherimiden, Polyesterimiden, Poly(ether)ketonen, Polysulfonen, Polyethersulfonen, Polyarylsulfonen, Polyphenylensulfiden, Polybenzimidazolen, Polyhydantoinen,
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polyhydroxybutyrat (PHB), Polyhydroxy-valerat (PHV), Polyethylensuccinat, Polytetranethylensuccinat, Polycaprolacton,
m)Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen,
r) Silikonen,
s) sowie Mischungen, Kombinationen oder Blends aus zwei oder mehr der zuvor genannten Polymere.

10. Verwendung nach einem der vorhergehenden Ansprüche, **dadurch gekennzeichnet, dass** der Kunststoff mindestens ein weiteres Additiv, ausgewählt aus der Gruppe bestehend aus UV-Absorber, Lichtstabilisatoren, Hydroxylamin basierten Stabilisatoren, Benzofuranon basierten Stabilisatoren, Nukleierungsmittel, Schlagzähigkeitsverbesserer, Weichmacher, Gleitmittel, Rheologiemodifikatoren, Kettenverlängerer, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel sowie Antifoggingmittel, enthält.

11. Verwendung nach einem der vorhergehenden Ansprüche, dass zur Stabilisierung der organischen Materialien zusätzlich zur Verbindung gemäß allgemeiner Formel I mindestens ein weiteres primäres und/oder sekundäres Antioxidans, insbesondere mindestens ein weiteres primäres und/oder sekundäres Antioxidans ausgewählt aus der Gruppe bestehend aus phenolischen Antioxidantien, Phosphiten, Phosphoniten, Aminen, Hydroxylaminen sowie Mischungen oder Kombinationen hiervon eingesetzt wird.

12. Kunststoffzusammensetzung, enthaltend mindestens einen Stabilisator oder eine Mischung mehrerer Stabilisatoren gemäß allgemeiner Formel I
A-B_{y} Formel I
wobei A, B und y wie in Anspruch 1 definiert sind.

13. Verfahren zur Stabilisierung von organischen Materialien, insbesondere gegen oxidativen, thermischen und/oder actinischen Abbau, bei dem eine Verbindung oder mehrere Verbindungen gemäß allgemeiner Formel I
A-B_{y} Formel I
wobei A, B und y wie in Anspruch 1 definiert sind, in das organische Material eingearbeitet wird.

## Claims

1. Use of a compound or of mixtures of a plurality of compounds in accordance with general formula I
A-B_{y} Formula I
wherein
the fragment A has the following meaning 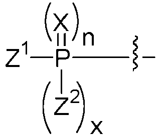
wherein in each case independently of one another
X is a sulphur atom,
n is 0 or 1,
x is 0 or 1,
Z¹ and Z² are selected from the group consisting of hydrogen, alkyl residues, aryl residues, alkylaryl residues, arylalkyl residues, heterocyclic residues, wherein one or more further fragments A and/or B may be bonded to the aforementioned residues,
and a grouping -O-Z³, where Z³ is selected from alkyl residues, aryl residues, alkylaryl residues, arylalkyl residues and heterocyclic residues,
and a grouping -S-Z⁴, where Z⁴ is selected from alkyl residues, aryl residues, alkylaryl residues, arylalkyl residues and heterocyclic residues,
wherein, in the case of x = 1, the residues Z¹ and Z² together with the phosphorus atom can form a ring system to which one or more further fragments A and/or B can be bonded,
the fragment B has the following meaning 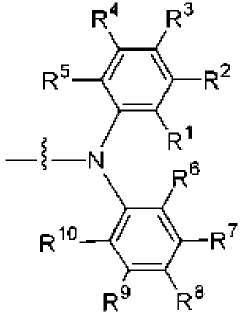
wherein in each case independently of one another
R¹ to R¹⁰ are selected from the group consisting of hydrogen, alkyl residues, aryl residues, alkylaryl residues, arylalkyl residues and heterocyclic residues, where the residues R¹ and R⁶ can also be linked via a grouping -Y- linking the phenyl groups, where Y is selected from the group consisting of S, O, NH, PH and a covalent bond,
where the fragments A and B are connected to each other by covalent bonding of the phosphorus atom and the nitrogen atom,
and wherein
y is 1 or 2,
where x + y = 2,
for stabilizing organic materials, in particular against oxidative thermal and/or actinic degradation,
**characterized in that** the fragment A is selected from the following residues 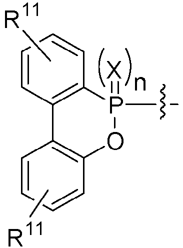 where x = y = 1 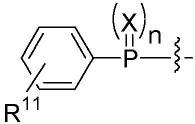 where x = 0 and y = 2, or 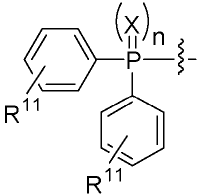 where x = y = 1 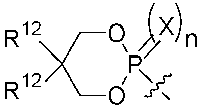 where x = y = 1
wherein in each case independently of one another
R¹¹ is selected from the group consisting of hydrogen, alkyl residues, aryl residues, alkylaryl residues, arylalkyl residues and heterocyclic residues,
R¹² is selected from the group consisting of hydrogen, alkyl residues, aryl residues, alkylaryl residues, arylalkyl residues, heterocyclic residues, wherein the aforementioned residues may also have heteroatoms and/or one or more further fragments A and/or B may be bonded to the aforementioned residues, and
X and n are as defined above.

2. The use according to claim 1, for stabilizing plastics, coatings, lubricants, hydraulic oils, engine oils, turbine oils, transmission oils, metalworking fluids, chemicals or monomers.

3. The use according to one of the preceding claims, **characterized in that**
the fragment A is selected from the following residues 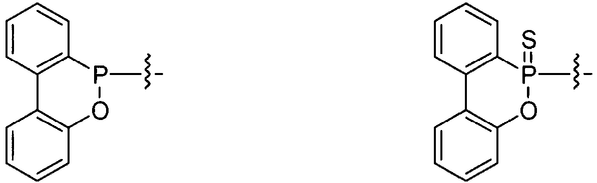
where, in each case, x = y = 1, 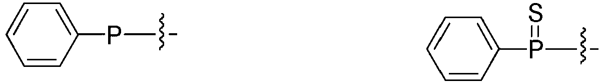
where x = 0 and y = 2, and 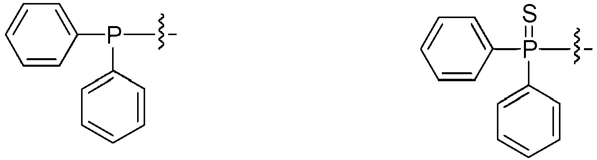
where, in each case, x = y = 1.

4. The use according to one of the preceding claims, **characterized in that** the compound according to general formula I is defined as follows 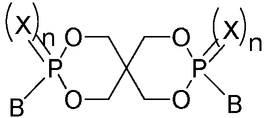 wherein X, n and B are as defined in claim 1.

5. The use according to any one of the preceding claims, **characterized in that** the fragment B is selected from the group consisting of the following residues 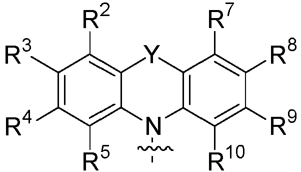 where y = 1 or 2, 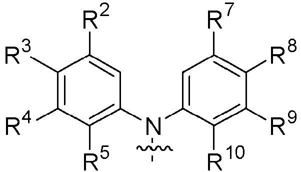 where y = 1 or 2, and 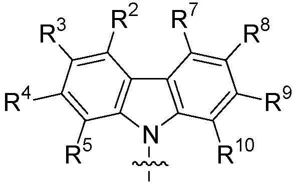 where y =1 or 2
wherein R² to R⁵ and R⁷ to R¹⁰ and Y are each independently defined as in claim 1.

6. The use according to any one of the preceding claims, **characterized in that** the fragment B is selected from the group consisting of the following residues

7. The use according to one of the preceding claims, **characterized in that** the compound in accordance with general formula I is selected from the group consisting of the following compounds: 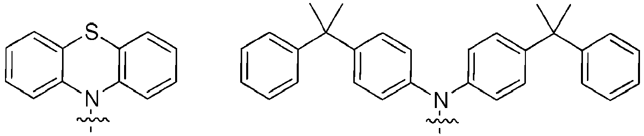 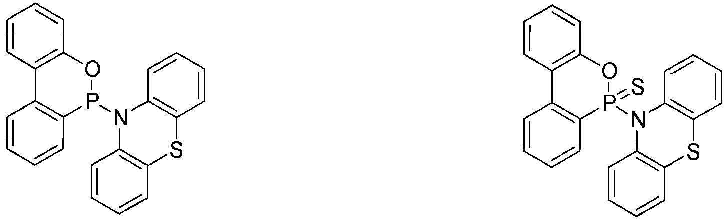 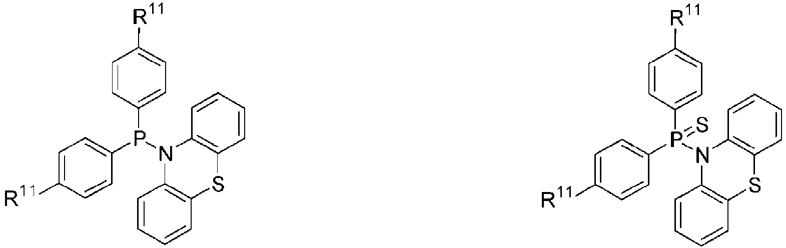 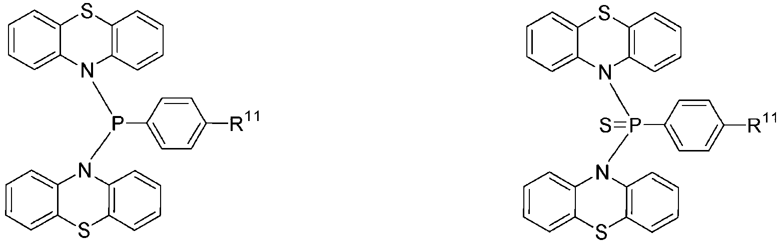 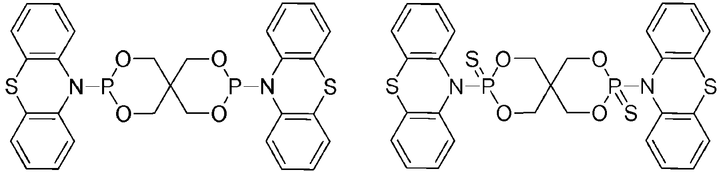 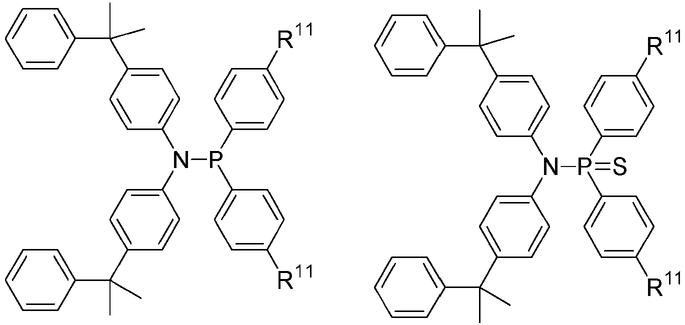 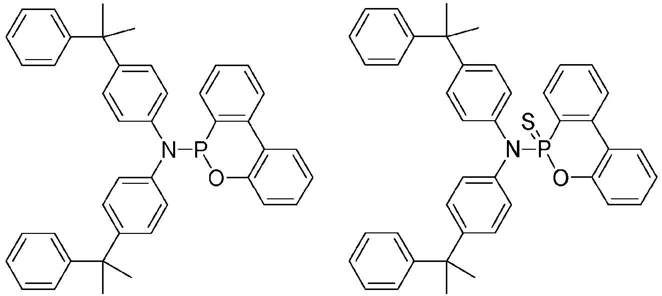 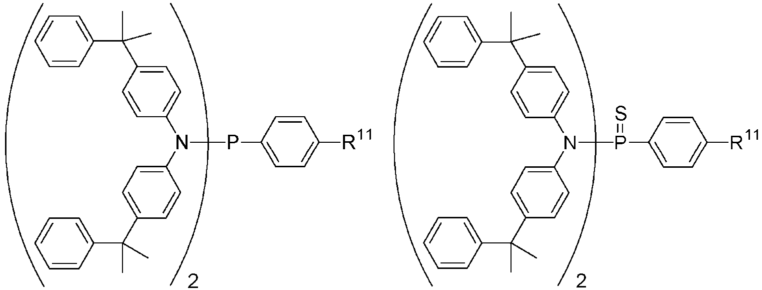 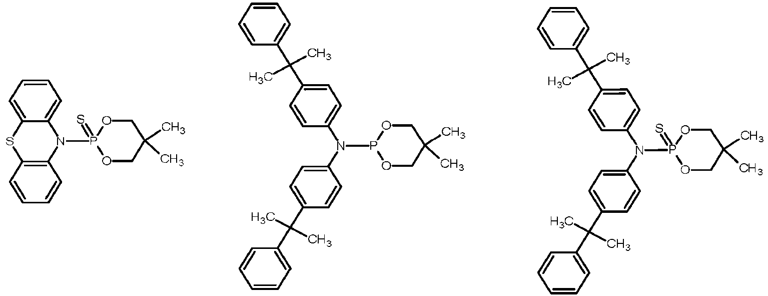 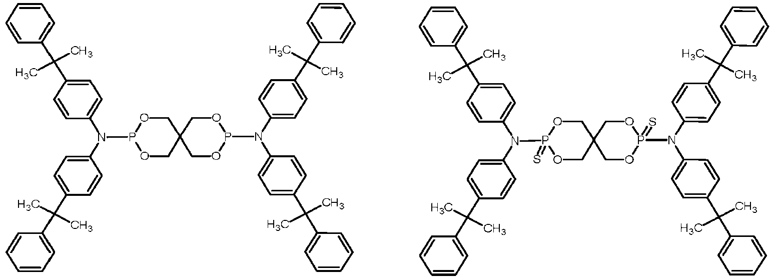 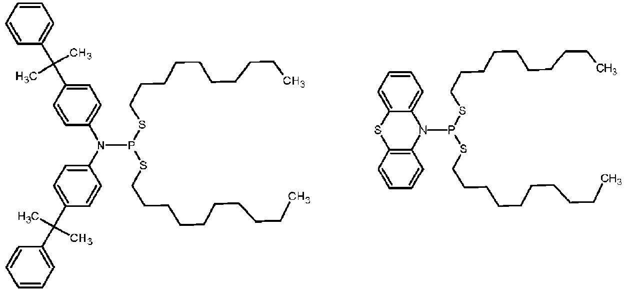 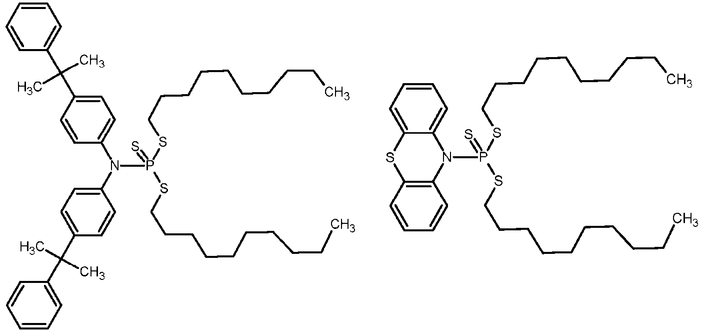 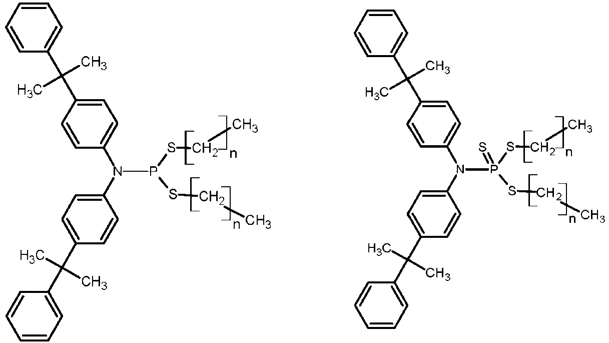 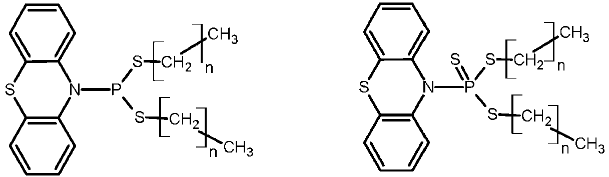 wherein in each case independently of one another
R¹¹ is selected from the group consisting of hydrogen, alkyl residues, aryl residues, alkylaryl residues, arylalkyl residues and heterocyclic residues.

8. The use according to one of the preceding claims, **characterized in that** the compound in accordance with general formula I or, in the case of a mixture of a plurality of compounds in accordance with general formula I the totality of all the compounds in accordance with general formula I, is included in the organic material at a weight proportion of 0.01 to 10 wt.%, preferably of 0.05 to 5 wt.%, particularly preferably of 0.1 to 1.5 wt.%.

9. The use according to any one of the preceding claims for stabilization of plastics, wherein the plastic is selected from the group consisting of
a) polymers made from olefins or diolefins such as polyethylene (LDPE, LLDPE, VLDPE, ULDPE, MDPE, HDPE, UHMWPE), metallocene PE (m-PE), polypropylene, polyisobutylene, poly-4-methyl-pentene-1, polybutadiene, polyisoprene, polycyclooctene, polyalkylene-carbon monoxide copolymers, as well as copolymers in the form of random or block structures such as polypropylene-polyethylene (EP, EPM or EPDM), ethylene-vinyl acetate (EVA), ethylene-acrylic ester, such as, for example, ethylene butyl acrylate, ethylene acrylic acid and its salts (ionomers), as well as terpolymers such as ethylene acrylic acid glycidyl (meth)acrylate, graft polymers such as Polypropylene-graft-maleic anhydride, polypropylene-graft-acrylic acid, polyethylene-graft-acrylic acid, polyethylene-polybutyl acrylate-graft-maleic anhydride and blends thereof,
b) polystyrene, polymethylstyrene, poly-alpha-methylstyrene, polyvinyl naphthalene, polyvinylbiphenyl, polyvinyltoluene, styrene-butadiene (SB), styrene-butadiene-styrene (SBS), styrene-ethylene-butylene-styrene (SEBS), Styrene-ethylenepropylene-styrene, styrene-isoprene, styrene-isoprene-styrene (SIS), styrene-butadiene-acrylonitrile (ABS), styrene-acrylonitrile (SAN), styrene-acrylonitrile-acrylate (ASA), styrene-ethylene, styrene-maleic acidurea anhydride polymers incl. corresponding graft copolymers such as styrene on butadiene, maleic anhydride on SBS or SEBS, as well as graft copolymers of methyl methacrylate, styrene-butadiene and ABS (MABS), and hydrogenated polystyrene derivatives,
c) halogen-containing polymers such as polyvinyl chloride (PVC), polychloroprene, and polyvinylidene chloride (PVDC), copolymers of vinyl chloride and vinylidene chloride or composed of vinyl chloride and vinyl acetate, chlorinated polyethylene, polyvinylidene fluoride, epichlorohydrin homo and copolymer thereof;
d) polymers of unsaturated esters such as polyacrylates and polymethacrylates such as polymethyl methacrylate (PMMA), polybutyl acrylate, polyauryl acrylate, poly stearyl acrylate, polyglycidyl methacrylate, polyacrylonitrile, polyacrylamides, copolymers such as polyacrylonitrile-poly alkyl acrylate;
e) polymers of unsaturated alcohols and derivatives, such as polyvinyl alcohol, polyvinyl acetate, polyvinyl butyral, polyallyl phthalate, polyallyl melamine,
f) polyacetals, such as e.g. polyoxymethylene (POM) or copolymers with, for example, butanal,
g) polyphenylene oxides and blends with polystyrene or polyamides,
h) polymers of cyclic ethers such as polyethylene glycol, polypropylene glycol, polyethylene oxide, polypropylene oxide, polytetrahydrofuran;
i) polyurethanes of hydroxy terminated polyethers or polyesters and aromatic or aliphatic isocyanates, in particular linear polyurethanes (TPU), polyureas;
j) polyamides such as polyamide-6, 6.6, 6.10, 4.6, 4.10, 6.12, 10.10, 10.12, 12.12, polyamide 11, polyamide 12 as well as (partly) aromatic polyamides, such as polyphthalamides, for example produced from terephthalic acid and/or isophthalic acid and aliphatic diamines or from aliphatic dicarboxylic acids such as adipic acid or sebacic acid and aromatic diamines such as 1,4- or 1,3-diaminobenzene, blends of different polyamides such as PA-6 and PA 6.6 or blends of polyamides and polyolefins such as PA/PP,
k) polyimides, polyamide-imides, polyether imides, polyester imides, poly(ether)ketones, polysulfones, polyether sulfones, polyaryl sulfones, polyphenylene sulfides, polybenzimidazoles, polyhydantoins,
l) polyesters made from aliphatic or aromatic dicarboxylic acids and diols or from hydroxy-carboxylic acids such as Polyethylene terephthalate (PET), polybutylene terephthalate (PBT), polypropylene terephthalate (PTT), polyethylene naphthylate (PEN), poly-1,4-dimethyl-olcyclohexane terephthalate, polyhydroxybenzoate, polyhydroxynaphthalate, polylactic acidure (PLA), polyhydroxybutyrate (PHB), polyhydroxyvalerate (PHV), polyethylene succinate, polytetranethylene succinate, polycaprolactone,
m) polycarbonates, polyester carbonates and blends such as PC/ABS, PC/PBT, PC/PET/PBT, PC/PA
n) cellulose derivatives, such as e.g. cellulose nitrate, cellulose acetate, cellulose propionate, cellulose butyrate,
o) epoxy resins consisting of di- or polyfunctional epoxy compounds in combination with, for example, hardeners based on amines, anhydrides, dicyandiamide, mercaptans, isocyanates or catalytic hardeners,
p) phenolic resins such as, for example phenol-formaldehyde resins, urea-formaldehyde resins, melamine-formaldehyde resins;
q) unsaturated polyester resins of unsaturated dicarboxylic acids and diols with vinyl compounds;
r) silicones;
s) and mixtures, combinations or blends of two or more of the aforementioned polymers.

10. The use according to any one of the preceding claims, **characterized in that** the plastic contains at least one further additive selected from the group consisting of UV absorbers, light stabilizers, hydroxylamine-based stabilizers, benzofuranone-based stabilizers, nucleating agents, impact strength improvers, plasticizers, lubricants, rheology modifiers, chain extenders, processing aids, pigments, dyes, optical brighteners, antimicrobial agents, antistatic agents, slip agents, antiblocking agents, coupling agents, dispersing agents, compatibilizers, oxygen scavengers, acid scavengers, marking agents and antifogging agents.

11. The use according to one of the preceding claims, wherein, for stabilizing the organic materials, in addition to the compound according to general formula I, at least one further primary and/or secondary antioxidant, in particular at least one further primary and/or secondary antioxidant selected from the group consisting of phenolic antioxidants, phosphites, phosphonites, amines, hydroxylamines and mixtures or combinations thereof, is used to stabilize the organic materials.

12. A plastics composition comprising at least one stabilizer or a mixture of several stabilizers according to general formula I
**A-B_{y}** Formula I
wherein A, B and y are as defined in claim 1.

13. A method of stabilizing organic materials, in particular against oxidative, thermal and/or actinic degradation, in which a compound or a plurality of compounds in accordance with general formula I
A-B_{y} Formula I
wherein A, B and y are as defined in claim 1, is incorporated into the organic material.

## Revendications

1. Utilisation d'un composé ou de mélanges de plusieurs composés de formule générale I
**A-B_{y}** Formule I
dans laquelle
le fragment A a la signification suivante 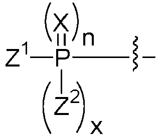
dans laquelle, de manière respectivement indépendante les uns des autres,
X est un atome de soufre,
n vaut 0 ou 1,
x vaut 0 ou 1,
Z¹ et Z² sont choisis dans le groupe constitué par l'hydrogène, les radicaux alkyle, les radicaux aryle, les radicaux alkylaryle, les radicaux arylalkyle, les radicaux hétérocycliques, dans laquelle un ou plusieurs autre(s) fragment(s) A et/ou B peuvent être lié(s) aux radicaux mentionnés ci-dessus,
ainsi qu'un groupement -O-Z³, dans laquelle Z³ est choisi parmi les radicaux alkyles, les radicaux aryles, les radicaux alkylaryles, les radicaux arylalkyles, ainsi que les radicaux hétérocycliques,
ainsi qu'un groupement -O-Z⁴, dans laquelle Z⁴ est choisi parmi les radicaux alkyles, les radicaux aryles, les radicaux alkylaryles, les radicaux arylalkyles, ainsi que les radicaux hétérocycliques,
dans laquelle, dans le cas de x = 1, les radicaux Z¹ et Z² peuvent former, en commun avec l'atome de phosphore, un système cyclique auquel un ou plusieurs autre(s) fragment(s) A et/ou B peu(ven)t être lié(s),
dans laquelle le fragment B a la signification suivante 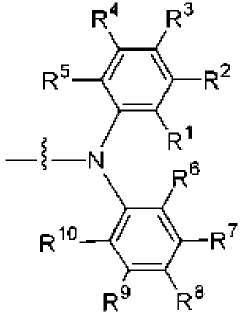
dans laquelle, de manière respectivement indépendante les uns des autres,
R¹ à R¹⁰ sont choisis dans le groupe constitué par l'hydrogène, les radicaux alkyle, les radicaux aryle, les radicaux alkylaryle, les radicaux arylalkyle ainsi que les radicaux hétérocycliques, dans laquelle les radicaux R¹ et R⁶ peuvent également être liés par l'intermédiaire d'un groupement -Y- liant les groupes phényle, dans laquelle Y est choisi dans le groupe constitué par S, O, NH, PH ainsi que par une liaison covalente,
dans laquelle les fragments A et B sont liés par liaison covalente du phosphore et de l'atome d'azote,
et dans laquelle
Y vaut 1 ou 2,
dans laquelle x + y = 2,
pour la stabilisation de matériaux organiques, en particulier contre la dégradation oxydative, thermique et/ou actinique,
**caractérisée en ce que** le fragment A est choisi parmi les radicaux ci-dessous 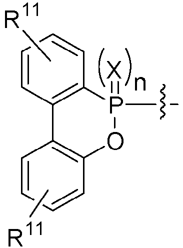 dans laquelle x = y = 1, 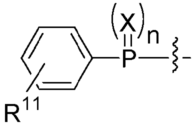 dans laquelle x = 0 et y = 2, ou 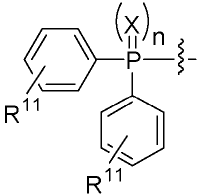 dans laquelle x = y = 1, 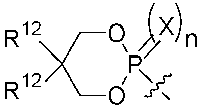 dans laquelle x = y = 1,
dans laquelle, de manière respectivement indépendante les uns des autres,
R¹¹ est choisi dans le groupe constitué par l'hydrogène, les radicaux alkyle, les radicaux aryle, les radicaux alkylaryle, les radicaux arylalkyle et les radicaux hétérocycliques,
R¹² est choisi dans le groupe constitué par l'hydrogène, les radicaux alkyle, les radicaux aryle, les radicaux alkylaryle, les radicaux arylalkyle, les radicaux hétérocycliques, dans laquelle les radicaux mentionnés ci-dessus peuvent également présenter des hétéroatomes et/ou un ou plusieurs autre(s) fragment(s) A et/ou B peuvent être lié(s) aux radicaux mentionnés ci-dessus, et
X et n sont tels que définis ci-dessus.

2. Utilisation selon la revendication 1 pour la stabilisation de plastiques, de revêtements, de lubrifiants, d'huiles hydrauliques, d'huiles pour moteur, d'huiles pour turbine, d'huiles pour transmission, de fluides de traitement des métaux, de produits chimiques ou de monomères.

3. Utilisation selon l'une quelconque des revendications précédentes, **caractérisée en ce que** le fragment A est choisi parmi les radicaux ci-dessous 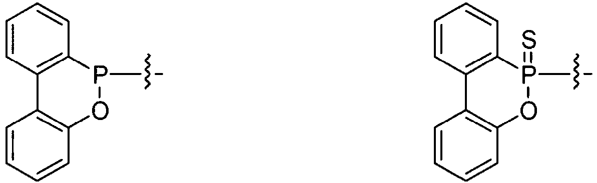
dans laquelle respectivement x = y = 1, 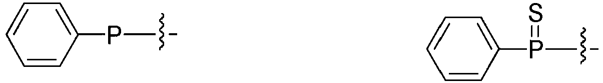
dans laquelle respectivement x = 0 et y = 2, ainsi que 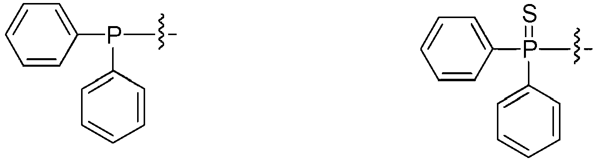
dans laquelle respectivement x = y = 1.

4. Utilisation selon l'une quelconque des revendications précédentes, **caractérisée en ce que** le composé de formule générale I est défini comme suit 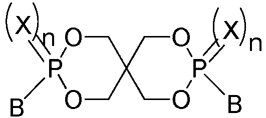 dans laquelle X, n et B sont tels que définis dans la revendication 1.

5. Utilisation selon l'une quelconque des revendications précédentes, **caractérisée en ce que** le fragment B est choisi dans le groupe constitué par les radicaux ci-dessous 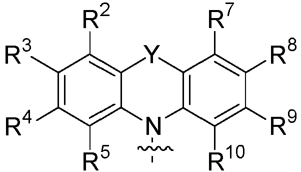 dans laquelle y = 1 ou 2, 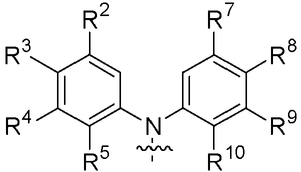 dans laquelle y = 1 ou 2, ainsi que 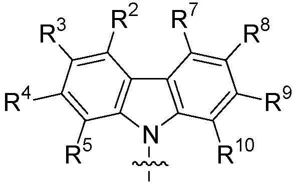 dans laquelle y = 1 ou 2,
dans laquelle, indépendamment les uns des autres, R² à R⁵ et R⁷ à R¹⁰ et Y sont tels que définis dans la revendication 1.

6. Utilisation selon l'une quelconque des revendications précédentes, **caractérisée en ce que** le fragment B est choisi dans le groupe constitué par les radicaux ci-dessous.

7. Utilisation selon l'une quelconque des revendications précédentes, **caractérisée en ce que** le composé de formule générale I est choisi dans le groupe constitué par les composés ci-dessous 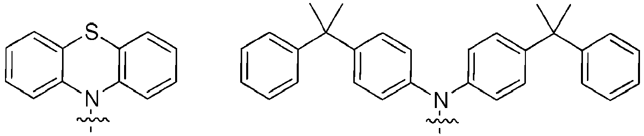 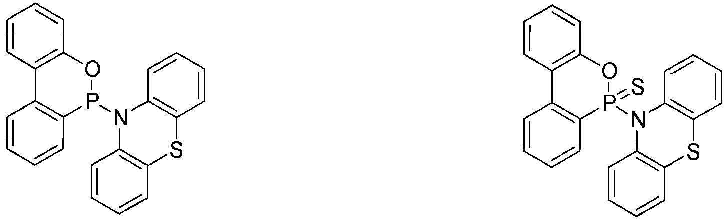 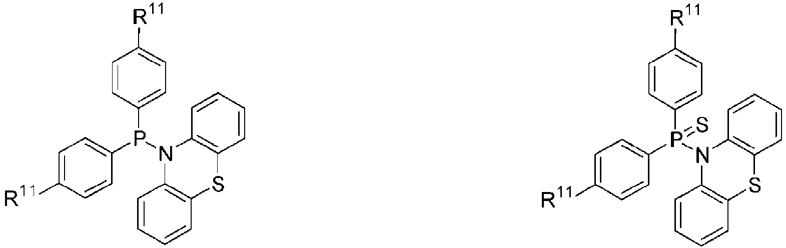 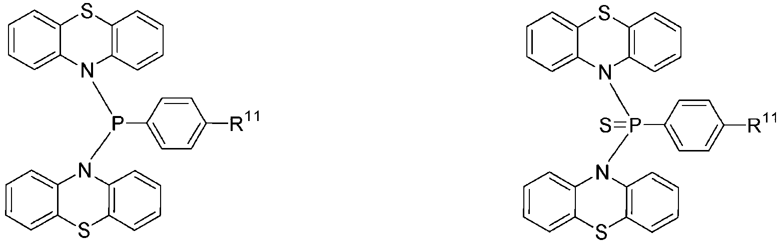 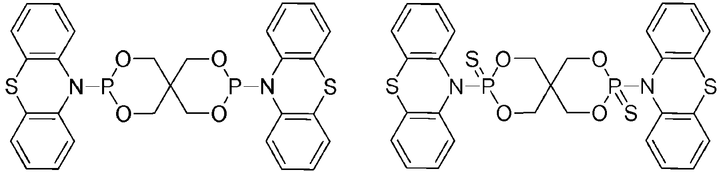 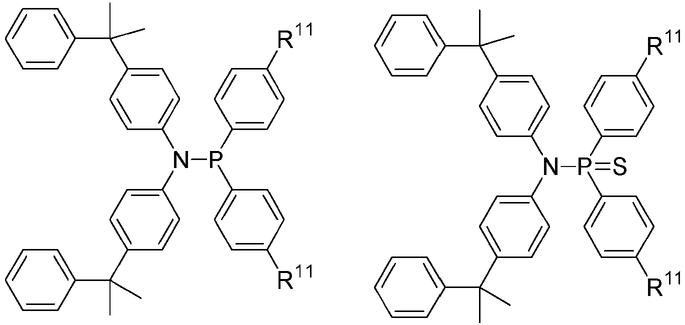 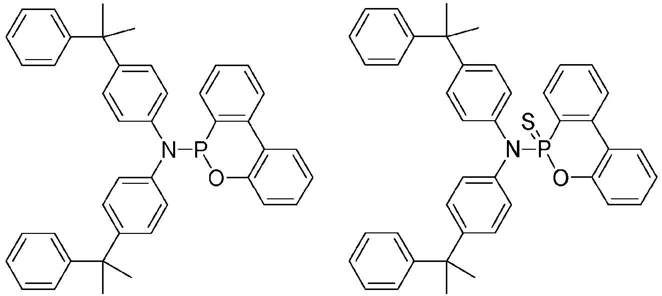 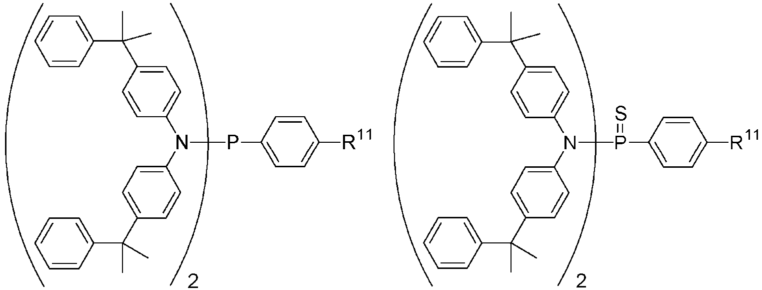 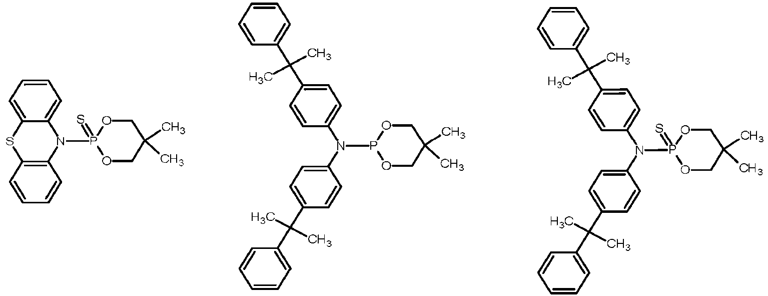 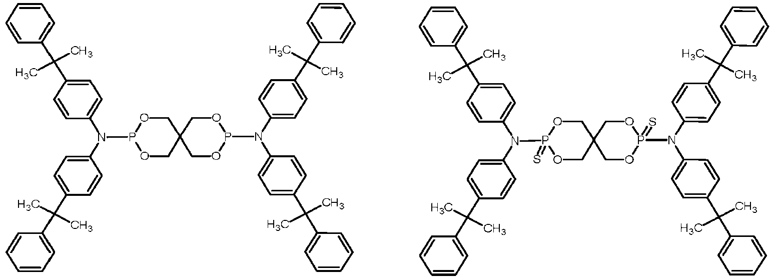 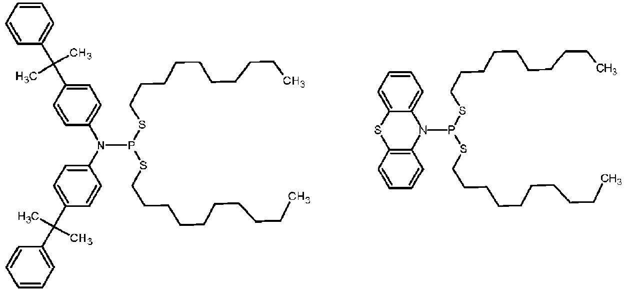 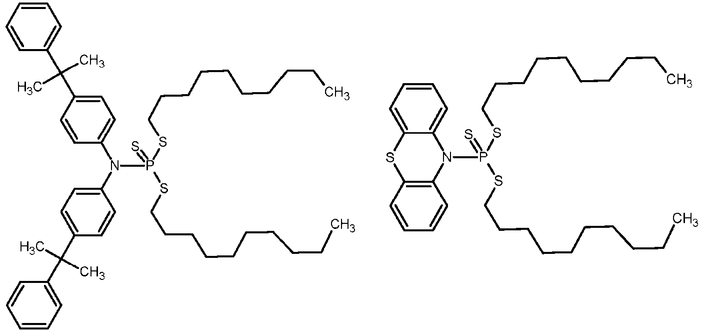 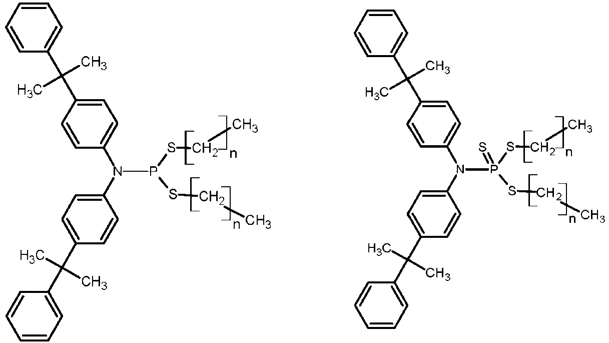 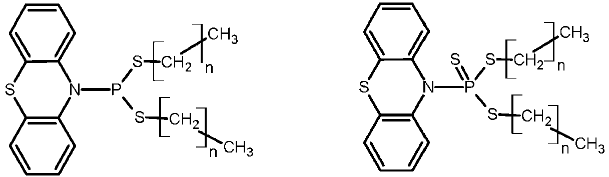 dans laquelle, de manière respectivement indépendante les uns des autres,
R¹¹ est choisi dans le groupe constitué par l'hydrogène, les radicaux alkyle, les radicaux aryle, les radicaux alkylaryle, les radicaux arylalkyle et les radicaux hétérocycliques.

8. Utilisation selon l'une quelconque des revendications précédentes, **caractérisée en ce que** le composé de formule générale I ou, dans le cas d'un mélange de plusieurs composés de formule générale I, la totalité de tous les composés de formule générale I est contenue dans la matière organique à une teneur en poids comprise entre 0,01 et 10 %, de manière préférée comprise entre 0,05 et 5 %, de manière particulièrement préférée comprise entre 0,1 et 1,5 %.

9. Utilisation selon l'une quelconque des revendications précédentes, pour la stabilisation de matières plastiques, dans laquelle la matière plastique est choisie dans le groupe constitué par
a) Polymères d'oléfines ou de dioléfines tels que polyéthylène (LDPE, LLDPE, VLDPE, ULDPE, MDPE, HDPE, UHMWPE), métallocène-PE (m-PE), polypropylène, polyisobutylène, poly-4-méthyl-pentène-1, polybutadiène, polyisoprène, polycyclooctène, copolymères de polyalkylène et de monoxyde de carbone, ainsi que copolymères sous forme de structures statistiques ou de blocs tels que polypropylène-polyéthylène (EP), EPM ou EPDM, éthylène-acétate de vinyle (EVA), esters acryliques d'éthylène tels que éthylène-acrylate de butyle, éthylène-acide acrylique et leurs sels (monomères), ainsi que terpolymères tels que éthylène-acide acrylique-(méth)acrylate de glycidyle, polymères greffés tels que polypropylène greffé à l'anhydride maléique, polypropylène greffé à l'acide acrylique, polyéthylène greffé à l'acide acrylique, polyéthylène-polyacrylate de butyle greffé à l'anhydride maléique, ainsi que des mélanges de ceux-ci,
b) polystyrène, polyméthylstyrène, polyalpha-méthylstyrène, polyvinyl-naphtalène, polyvinylbiphényle, polyvinyltoluène, styrène-butadiène (SB), styrène-butadiène-styrène (SBS), styrène-éthylène-butylène-styrène (SEBS), styrène-éthylène-propylène-styrène, styrène-isoprène, styrène-isoprène-styrène (SIS), styrène-butadiène-acrylonitrile (ABS), styrène-acrylonitrile (San), styrène-acrylonitrile-acrylate (ASA), styrène-éthylène, polymères de styrène-anhydride maléique, y compris les copolymères greffés correspondants tels que styrène sur butadiène, l'anhydride maléique sur SBS ou SEBS, ainsi que les copolymères greffés à partir de méthacrylate de méthyle, de styrène-butadiène et d'ABS (MABS), ainsi que des dérivés de polystyrène hydrogénés,
c) polymères halogénés tels que le chlorure de polyvinyle (PVC), polychloroprène et le chlorure de polyvinylidène (PVDC), copolymères issus de chlorure de vinyle et de chlorure de vinylidène ou de chlorure de vinyle et d'acétate de vinyle, polyéthylène chloré, fluorure de polyvinylidène, homopolymère épichlorhydrine, et leurs copolymères,
d) polymères d'esters insaturés tels que les polyacrylates et les polyméthacrylates, par exemple polyméthacrylate de méthyle (PMMA), polyacrylate de butyle, polyacrylate d'acryle, polyacrylate de stéaryle, polyacrylate de glycidyle, polyméthacrylate de glycidyle, polyacrylonitrile, polyacrylamides, copolymères tels que l'acrylate de polyacrylonitrile-polyalkyle,
e) polymères issus d'alcools insaturés et dérivés, tels que alcool polyvinylique, acétate de polyvinyle, butyral de polyvinyle, phtalate de polyallyle, polyallylmélamine,
f) polyacétals, tels que polyoxyméthylène POM) ou copolymères avec, par exemple, le butanal,
g) oxydes de polyphénylène et mélanges avec du polystyrène ou des polyamides,
h) polymères d'éthers cycliques tels que polyéthylène glycol, polypropylène glycol, oxyde de polyéthylène, oxyde de polypropylène, polytétrahydrofuranne,
i) polyuréthanes, issus de polyéthers ou polyesters à terminaison hydroxy et d'isocyanates aromatiques ou aliphatiques, en particulier polyuréthanes linéaires (TPU), polyurées,
j) Polyamides tels que polyamide-6, 6.6, 6.10, 4.6, 4.10, 6.12, 10.10, 10.12, 12.12, polyamide 11, polyamide 12 ainsi que polyamides (partiellement)aromatiques tels que polyphtalamides, fabriqués par exemple à partir d'acide téréphtalique et/ou d'acide isophtalique et de diamines aliphatiques ou à partir d'acides dicarboxyliques aliphatiques tels que l'acide adipique ou l'acide sébacique et de diamines aromatiques telles que le 1,4- ou 1,3-diaminobenzène, mélanges de différents polyamides tels que PA-6 et PA 6.6 ou mélanges de polyamides et de polyoléfines tels que PA/PP
k) polyimides, polyamidimides, polyétherimides, polyesterimides, poly(éther)cétones, polysulfones, polyéthersulfones, polyarylsulfones, sulfures de polyphénylène, polybenzimidazoles, polyhydantoïnes,
l) Polyesters issus d'acides dicarboxyliques aliphatiques ou aromatiques et de diols ou issus d'acides hydroxy-carboxyliques tels que polytéréphtalate d'éthylène (PET), polytéréphtalate de butylène (PBT), polytéréphtalate de propylène (PTT), polynaphtalate d'éthylène (PEN), polytéréphtalate de 1,4-diméthylolcyclohexane, polyhydroxybenzoate, polyhydroxynaphthalate, acide polylactique (PLA), polyhydroxybutyrate (PHB), polyhydroxyvalérate (PHV), polysuccinate d'éthylène, polysuccinate de tétraméthylène, polycaprolactone,
m) Polycarbonates, polyestercarbonates, ainsi que des mélanges tels que PC/ABS, PC/PBT, PC/PET/PBT, PC/PA
n) dérivés de la cellulose tels que le nitrate de cellulose, l'acétate de cellulose, le propionate de cellulose, le butyrate de cellulose,
o) résines époxydes, constituées de composés époxydes difonctionnels ou polyfonctionnels en combinaison avec, par exemple, des durcisseurs à base d'amines, d'anhydrides, de dicyandiamide, de mercaptans, d'isocyanates ou de durcisseurs catalytiques,
p) résines phénoliques telles que les résines phénol-formaldéhyde, les résines urée-formaldéhyde, les résines mélamine-formaldéhyde,
q) résines polyester insaturées à base d'acides dicarboxyliques insaturés et de diols avec des composés vinyliques,
r) silicones,
s) ainsi que les mélanges, combinaisons ou mélanges de deux ou plus de deux polymères mentionnés ci-dessus.

10. Utilisation selon l'une quelconque des revendications précédentes, **caractérisée en ce que** la matière plastique contient au moins un autre additif choisi dans le groupe constitué par les absorbeurs d'UV, les stabilisateurs de lumière, les stabilisateurs à base d'hydroxylamine, les stabilisateurs à base de benzofuranone, les agents de nucléation, les agents d'amélioration de la résistance aux chocs, les plastifiants, les lubrifiants, les modificateurs de rhéologie, les agents d'allongement de chaîne, les agents auxiliaires de traitement, les pigments, les colorants, les azurants optiques, les agents antimicrobiens, les agents antistatiques, les agents de glissement, les agents de couplage, les agents de dispersion, les agents de compatibilité, les capteurs d'oxygène, les capteurs d'acide, les agents de marquage et les agents anti-buée.

11. Utilisation selon l'une quelconque des revendications précédentes, dans laquelle au moins un autre antioxydant primaire et/ou secondaire, en particulier au moins un autre antioxydant primaire et/ou secondaire choisi dans le groupe constitué par les antioxydants phénoliques, les phosphites, les phosphonites, les amines, les hydroxylamines et leurs mélanges ou combinaisons, est utilisé en plus du composé de formule générale I pour la stabilisation des matériaux organiques.

12. Composition de matière plastique contenant au moins un stabilisant ou un mélange de plusieurs stabilisants de formule générale I
**A-B_{y}** Formule I
dans laquelle A, B et y sont tels que définis dans la revendication 1.

13. Procédé de stabilisation de matériaux organiques, en particulier contre la dégradation oxydative, thermique et/ou actinique, dans lequel un ou plusieurs composé(s) selon la formule générale I
A-B_{y} Formule I
A, B et y étant tels que définis dans la revendication 1, est/sont incorporé(s) dans la matière organique.
